# EUROPÄISCHE PATENTANMELDUNG

(11) **EP 4 095 796 A1**
(43) Veröffentlichungstag der Anmeldung: **30.11.2022**
(21) Anmeldenummer: 21176759.5
(22) Anmeldetag: 29.05.2021
(51) Int. Cl.: G06T 7/00

(54) **MASCHINELLES LERNEN IM BEREICH DER KONTRASTMITTELVERSTÄRKTEN RADIOLOGIE**

(71) Anmelder: Bayer AG, 51373 Leverkusen (DE)
(72) Erfinder: Lenga, Matthias, Berlin (DE)
(74) Vertreter: BIP Patents

(57) **Zusammenfassung**

Die vorliegende Erfindung befasst sich mit dem technischen Gebiet der Erzeugung von künstlichen kontrastmittelverstärkten radiologischen Aufnahmen mittels Methoden des maschinellen Lernens.

## Beschreibung

Die vorliegende Erfindung befasst sich mit dem technischen Gebiet der Erzeugung von künstlichen kontrastmittelverstärkten radiologischen Aufnahmen mittels Methoden des maschinellen Lernens.

Die Radiologie ist ein medizinisches Fachgebiet, das sich mit der Bildgebung zu diagnostischen und therapeutischen Zwecken befasst.

Während in der medizinischen Bildgebung früher in erster Linie Röntgenstrahlung und für die Röntgenstrahlung empfindliche Filme zum Einsatz kamen, gehören zur Radiologie heutzutage mehrere verschiedene Bildgebungsverfahren wie Computertomographie (CT), Magnetresonanztomographie (MRT) oder Sonographie.

Bei all diesen Verfahren können Substanzen eingesetzt werden, die die Darstellung bzw. Abgrenzung bestimmter Strukturen in einem Untersuchungsobjekt erleichtern. Diese Substanzen bezeichnet man als Kontrastmittel.

Nach ihrem Verteilungsmuster im Gewebe können Kontrastmittel grob in die folgenden Kategorien eingeteilt werden: extrazelluläre, intrazelluläre und intravaskuläre Kontrastmittel.

Als extrazelluläre Kontrastmittel werden niedermolekulare, wasserlösliche Verbindungen bezeichnet, die sich nach intravenöser Gabe in den Blutgefäßen und im interstitiellen Raum verteilen. Sie werden nach einer gewissen, vergleichsweise kurzen Zeitspanne der Zirkulation im Blutkreislauf über die Nieren ausgeschieden. Zu den extrazellulären MRT-Kontrastmitteln zählen beispielsweise die Gadolinium-Chelate Gadobutrol (Gadovist^{®}), Gadoteridol (Prohance^{®}), Gadotersäure (Dotarem^{®}), Gadopentetsäure (Magnevist^{®}) und Gadodiamid (Omnican^{®}).

Intrazelluläre Kontrastmittel werden zu gewissen Anteilen in die Zellen von Geweben aufgenommen und anschließend wieder ausgeschieden. Intrazelluläre MRT-Kontrastmittel auf der Basis der Gadoxetsäure zeichnen sich beispielsweise dadurch aus, dass sie anteilig spezifisch von Leberzellen, den Hepatozyten, aufgenommen werden, sich im Funktionsgewebe (Parenchym) anreichern und die Kontraste in gesundem Lebergewebe verstärken, bevor sie anschließend über Galle in die Faeces ausgeschieden werden. Beispiele für derartige Kontrastmittel auf der Basis der Gadoxetsäure sind in US 6,039,931A beschrieben; sie sind kommerziell zum Beispiel unter den Markennamen Primovist^{®} und Eovist^{®} erhältlich. Ein weiteres MRT-Kontrastmittel mit einer geringeren Aufnahme in die Hepatozyten ist Gadobenate Dimeglumine (Multihance^{®}).

Intravaskuläre Kontrastmittel zeichnen sich durch eine im Vergleich zu den extrazellulären Kontrastmitteln deutlich längere Verweilzeit im Blutkreislauf aus. Gadofosveset ist beispielsweise ein intravaskuläres MRT-Kontrastmittel auf Gadoliniumbasis. Es wurde als Trinatriumsalz-Monohydratform verwendet (Ablavar^{®}). Es bindet an Serumalbumin, wodurch die lange Verweilzeit des Kontrastmittels im Blutkreislauf erreicht wird (Halbwertzeit im Blut etwa 17 Stunden).

Ablavar^{®} wurde jedoch 2017 vom Markt genommen. Ein anderes als Blutpool-Kontrastmittel für die Magnetresonanztomographie zugelassenes Kontrastmittel ist nicht kommerziell erhältlich. Ebenso befindet sich kein als Blutpool-Kontrastmittel für die Computertomographie zugelassenes Kontrastmittel auf dem Markt.

Bei der Erzeugung von radiologischen Aufnahmen mit einer vergleichsweise langen Akquisitionszeit/Scanzeit, zum Beispiel Aufnahmen unter freier Atmung von Thorax und Abdomen zur Darstellung des Gefäßsystems (z.B. Lungenembolie-Diagnostik unter freier Atmung im MRT), wird ein extrazelluläres Kontrastmittel vergleichsweise schnell aus dem Blutgefäßsystem ausgesondert, so dass der Kontrast schnell sinkt.

Wird ein Aufnahmevolumen schichtweise abgescannt, um eine Mehrzahl von Tomogrammen zu erzeugen, sinkt die Kontrastverstärkung von Tomogramm zu Tomogramm aufgrund der Auswaschung des Kontrastmittels kontinuierlich ab. Schichten, die zu einem späteren Zeitpunkt gescannt wurden, werden in einem entsprechenden Tomogramm kontrastärmer dargestellt als Schichten, die zu einem früheren Zeitpunkt gescannt wurden.

Diesem Problem widmet sich die vorliegende Erfindung.

Ein erster Gegenstand der vorliegenden Erfindung ist ein Verfahren zum Erzeugen eines künstlichen, kontrastverstärkten Tomogramms, umfassend die Schritte:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt worden ist,
o Bereitstellen eines Vorhersagemodells, wobei das Vorhersagemodell anhand eines Trainingsdatensatzes trainiert worden ist, Kontrastinformationen von mindestens einem Tomogramm auf ein anderes Tomogramm zu übertragen und dabei ein künstliches Tomogramm zu erzeugen,
o Zuführen des ersten und zweiten Tomogramms dem Vorhersagemodell,
o Empfangen eines künstlichen Tomogramms von dem Vorhersagemodell, wobei das künstliche Tomogramm die zweite Schicht in dem Aufnahmevolumen repräsentiert, wobei in dem künstlichen Tomogramm Kontrastinformationen von dem ersten Tomogramm übertragen worden sind,
o Ausgeben des künstlichen Tomogramms.

Vorzugsweise betrifft der erste Gegenstand der vorliegenden Erfindung ein Verfahren zum Erzeugen eines künstlichen, kontrastverstärkten Tomogramms, umfassend die Schritte:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert,
o Empfangen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
o Bereitstellen eines Vorhersagemodells, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
o Zuführen des ersten, zweiten und dritten Tomogramms dem Vorhersagemodell,
o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
o Ausgeben des künstlichen Tomogramms.

Ein weiterer Gegenstand der vorliegenden Erfindung ist ein Verfahren zum Trainieren eines Vorhersagemodells, umfassend die Schritte
- Empfangen eines Trainingsdatensatzes, wobei der Trainingsdatensatz für jedes Referenzobjekt einer Vielzahl von Referenzobjekten eine Mehrzahl an Referenz-Tomogrammen umfasst,
   o wobei die Referenz-Tomogramme ein Aufnahmevolumen des Referenzobjekts nach der Applikation eines Kontrastmittels repräsentieren,
   o wobei die Referenz-Tomogramme für jedes Referenzobjekts mindestens zwei Tomogramme umfassen: ein erstes Referenz-Tomogramm und ein zweites Referenz-Tomogramm,
      ▪ wobei das erste Referenz-Tomogramm eine erste Schicht innerhalb des Aufnahmevolumens repräsentiert,
      ▪ wobei das zweite Referenz-Tomogramm eine zweite Schicht innerhalb des Aufnahmevolumens repräsentiert,
         - wobei das zweite Referenz-Tomogramm zeitlich nach dem ersten Referenz-Tomogramm erzeugt worden ist,
- Trainieren des Vorhersagemodells, wobei dem Vorhersagemodell beim Trainieren das erste und das zweite Referenz-Tomogramm zugeführt werden, wobei das Vorhersagemodell trainiert wird, Kontrastverstärkung von dem ersten Referenz-Tomogramm auf das zweite Referenz-Tomogramm zu übertragen und ein künstliches Tomogramm zu erzeugen, das die zweite Schicht repräsentiert.

Vorzugsweise betrifft ein weiterer Gegenstand der vorliegenden Erfindung ein Verfahren zum Trainieren eines Vorhersagemodells, umfassend die Schritte
- Empfangen eines Trainingsdatensatzes, wobei der Trainingsdatensatz für jedes Referenzobjekt einer Vielzahl von Referenzobjekten eine Mehrzahl an Referenz-Tomogrammen umfasst,
   o wobei die Referenz-Tomogramme ein Aufnahmevolumen des Referenzobjekts nach der Applikation eines Kontrastmittels repräsentieren,
   o wobei die Referenz-Tomogramme für jedes Referenzobjekts mindestens drei Tomogramme umfassen: ein erstes Referenz-Tomogramm, ein zweites Referenz-Tomogramm und ein drittes Referenz-Tomogramm,
      ▪ wobei das erste Referenz-Tomogramm eine erste Schicht innerhalb des Aufnahmevolumens repräsentiert,
      ▪ wobei das zweite Referenz-Tomogramm eine zweite Schicht innerhalb des Aufnahmevolumens repräsentiert,
      ▪ wobei das dritte Referenz-Tomogramm eine dritte Schicht innerhalb des Aufnahmevolumens repräsentiert,
         - wobei die dritte Schicht in dem Aufnahmevolumen zwischen der ersten Schicht und der zweiten Schicht liegt,
         - wobei das dritte Referenz-Tomogramm zeitlich nach dem ersten Referenz-Tomogramm und dem zweiten Referenz-Tomogramm erzeugt worden ist,
- Trainieren des Vorhersagemodells, wobei dem Vorhersagemodell das erste, das zweite und das dritte Referenz-Tomogramm zugeführt werden, wobei das Vorhersagemodell trainiert wird, Kontrastverstärkung von dem ersten und dem zweiten Referenz-Tomogramm auf das dritte Referenz-Tomogramm zu übertragen und ein künstliches Tomogramm zu erzeugen, das die dritte Schicht repräsentiert.

Ein weiterer Gegenstand der vorliegenden Erfindung ist ein Computersystem umfassend
- eine Empfangseinheit,
- eine Steuer- und Recheneinheit und
- eine Ausgabeeinheit,
   o wobei die Steuer- und Recheneinheit konfiguriert ist, die Empfangseinheit zu veranlassen mindestens ein erstes und ein zweites Tomogramm zu empfangen,
      - wobei das erste Tomogramm eine erste Schicht innerhalb eines Aufnahmevolumens eines Untersuchungsobjekts nach der Applikation eines Kontrastmittels repräsentiert,
      - wobei das zweite Tomogramm eine zweite Schicht innerhalb des Aufnahmevolumens des Untersuchungsobjekts nach der Applikation des Kontrastmittels repräsentiert,
      - wobei das zweite Tomogramm zeitlich nach dem ersten und dem zweiten Tomogramm erzeugt worden ist,
   o wobei die Steuer- und Recheneinheit konfiguriert ist, das erste und das zweite Tomogramm einem Vorhersagemodell zuzuführen, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
   o wobei die Steuer- und Recheneinheit konfiguriert ist, von dem Vorhersagemodell ein künstliches Tomogramm zu empfangen, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
   o wobei die Steuer- und Recheneinheit konfiguriert ist, die Ausgabeeinheit zu veranlassen, das künstliche Tomogramm auszugeben.

Ein weiterer Gegenstand der vorliegenden Erfindung ist ein Computerprogrammprodukt umfassend ein Computerprogramm, das in einen Arbeitsspeicher eines Computersystems geladen werden kann und dort das Computersystem dazu veranlasst, folgende Schritte ausführen:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt worden ist,
o Zuführen des ersten und zweiten Tomogramms einem Vorhersagemodell, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o Empfangen eines künstlichen Tomogramms von dem Vorhersagemodell, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o Ausgeben des künstlichen Tomogramms.

Ein weiterer Gegenstand der vorliegenden Erfindung ist eine Verwendung eines Kontrastmittels in einem Verfahren zur Vorhersage eines künstlichen kontrastverstärkten Tomogramms, wobei das Verfahren die folgenden Schritte umfasst:
o Erzeugen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Erzeugen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt wird,
o Zuführen des ersten, und zweiten Tomogramms einem Vorhersagemodell, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o Empfangen eines künstlichen Tomogramms von dem Vorhersagemodell, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o Ausgeben des künstlichen Tomogramms.

Ein weiterer Gegenstand ist ein Kontrastmittel zur Verwendung in einem Verfahren zur Vorhersage eines künstlichen kontrastverstärkten Tomogramms, wobei das Verfahren die folgenden Schritte umfasst:
o Erzeugen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Erzeugen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt wird,
o Zuführen des ersten und zweiten Tomogramms einem Vorhersagemodell, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o Empfangen eines künstlichen Tomogramms von dem Vorhersagemodell, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o Ausgeben des künstlichen Tomogramms.

Ein weiterer Gegenstand ist ein Kit umfassend ein Kontrastmittel und ein erfindungsgemäßes Computerprogrammprodukt.

Die Erfindung wird nachstehend näher erläutert, ohne zwischen den Erfindungsgegenständen (Verfahren, Computersystem, Computerprogrammprodukt, Verwendung, Kontrastmittel zur Verwendung, Kit) zu unterscheiden. Die nachfolgenden Erläuterungen sollen vielmehr für alle Erfindungsgegenstände in analoger Weise gelten, unabhängig davon, in welchem Kontext (Verfahren, Computersystem, Computerprogrammprodukt, Verwendung, Kontrastmittel zur Verwendung, Kit) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung erzeugt für ein Untersuchungsobjekt auf Basis einer Mehrzahl an realen Tomogrammen mindestens ein künstliches, kontrastverstärktes Tomogramm.

Das "Untersuchungsobjekt" ist üblicherweise ein Lebewesen, vorzugsweise ein Säugetier, ganz besonders bevorzugt ein Mensch.

Der Begriff "Mehrzahl" bedeutet eine Anzahl von mindestens zwei.

Ein "Tomogramm" ist eine Repräsentation einer Schicht in einem Aufnahmevolumen des Untersuchungsobjekts. Zum Begriff "Tomogramm" synonyme Begriffe sind die Begriffe "Schnittbild", "Schichtbild" und "Schichtaufnahme".

Ein Tomogramm gibt die inneren Strukturen so wieder, wie sie nach dem Aufschneiden des Untersuchungsobjekts oder nach dem Herausschneiden einer (dünnen) Scheibe vorlägen.

Ein Tomogramm ist üblicherweise das Ergebnis einer radiologischen Untersuchung. Beispiele für solche radiologischen Untersuchungen sind Computertomographie (CT), Magnetresonanztomographie (MRT) und Sonografie.

Der Begriff "real" bedeutet, dass ein Tomogramm das Ergebnis einer realen, d.h. an einem Untersuchungsobjekt (vorzugsweise an einem Lebewesen) tatsächlich durchgeführten Messung ist. Der Begriff "real" dient der Abgrenzung gegenüber künstlichen Tomogrammen, d.h. gegenüber Tomogrammen, die synthetisch erzeugt werden, die also nicht das (unmittelbare) Ergebnis einer realen Messung sind, d.h. die nicht das (unmittelbare) Ergebnis einer an einem Untersuchungsobjekt tatsächlich durchgeführten Messung sind. Allerdings kann ein künstliches (synthetisch erzeugtes) Tomogramm auf einem realen Tomogramm oder auf mehreren realen Tomogrammen basieren. Erfindungsgemäß erzeugte künstliche Tomogramme basieren auf mindestens zwei, vorzugsweise mindestens drei realen Tomogrammen.

Zur Erzeugung von realen Tomogrammen wird üblicherweise ein Teil des Untersuchungsobjekts - der Untersuchungsbereich - einer radiologischen Untersuchung unterzogen. Der "Untersuchungsbereich", auch Aufnahmevolumen (engl.: *field of view,* FOV) genannt, stellt insbesondere ein Volumen dar, welches in den radiologischen Aufnahmen abgebildet wird. Der Untersuchungsbereich wird typischerweise durch einen Radiologen, beispielsweise auf einer Übersichtsaufnahme (engl.: *localizer)* festgelegt. Selbstverständlich kann der Untersuchungsbereich alternativ oder zusätzlich auch automatisch, beispielsweise auf Grundlage eines ausgewählten Protokolls, festgelegt werden. Der Untersuchungsbereich kann beispielsweise die Leber oder ein Teil der Leber, die Lunge oder ein Teil der Lunge, das Herz oder ein Teil des Herzes, die Aorta oder ein Teil der Aorta, abdominelle Blutgefäße, Bein-Becken-Blutgefäße, die Speiseröhre oder ein Teil der Speiseröhre, der Magen oder ein Teil des Magens, der Dünndarm oder ein Teil des Dünndarms, der Dickdarm oder ein Teil des Dickdarms, das Abdomen oder ein Teil des Abdomens, die Bauchspeicheldrüse oder ein Teil der Bauchspeicheldrüse und/oder ein anderer Teil des Untersuchungsobjekts sein oder diesen umfassen.

Die realen Tomogramme, die erfindungsgemäß zur Erzeugung eines künstlichen Tomogramms oder mehrerer künstlicher Tomogramme verwendet werden, repräsentieren Schichten innerhalb eines Aufnahmevolumens eines Untersuchungsobjekts nach der Applikation eines Kontrastmittels. Vorzugsweise handelt es sich bei den Schichten um planare Schichten mit einer definierten Schichtdicke, die Schichten innerhalb des Aufnahmevolumens des Untersuchungsobjekts in einer räumlichen Abfolge parallel zueinander angeordnet sind.

In einem ersten Schritt wird dem Untersuchungsobjekt ein Kontrastmittel appliziert (z.B. durch eine inravenöse Bolusinjektion), das sich in dem Aufnahmevolumen verteilt, und es werden eine Mehrzahl von realen Tomogrammen erzeugt. Es ist denkbar, dass eine oder mehrere Tomogramme vor der Applikation des Kontrastmittels erzeugt werden; diese so genannten nativen Aufnahmen zeigen das Aufnahmevolumen ohne Gabe eines Kontrastmittels.

Die Tomogramme, die nach Applikation des Kontrastmittels erzeugt werden, werden üblicherweise nacheinander erzeugt: das Aufnahmevolumen wird Schicht für Schicht gescannt und von jeder Schicht wird ein Tomogramm erzeugt.

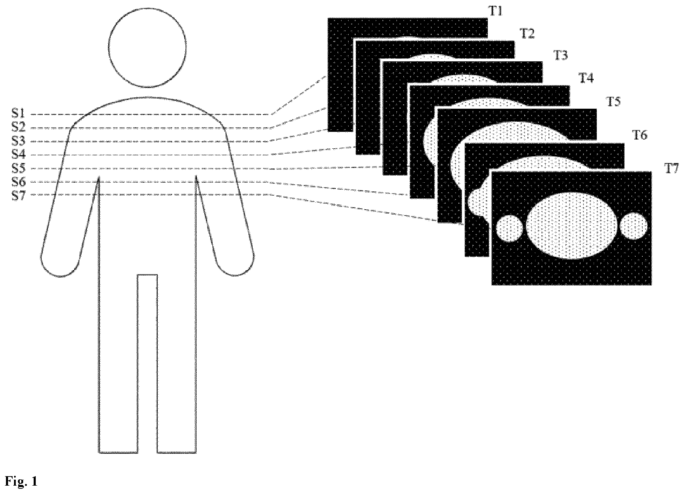

Dies ist schematisch in Fig. 1 gezeigt. Fig. 1 zeigt schematisch einen Menschen, dessen Oberkörper einer radiologischen Untersuchung unterzogen wird. Der Oberkörper stellt das Aufnahmevolumen dar. Von dem Aufnahmevolumen werden sieben Tomogramme erzeugt, die in Fig. 1 mit den Bezugszeichen T1, T2, T3, T4, T5, T6 und T7 gekennzeichnet sind. Jedes Tomogramm repräsentiert eine Schicht innerhalb des Aufnahmevolumens. Diese Schichten sind in Fig. 1 mit den Bezugszeichen S1, S2, S3, S4, S5, S6 und S7 gekennzeichnet. Jede dieser Schichten weist eine definierte Schichtdicke auf. Die Schichten können unmittelbar aneinander angrenzen, sie können voneinander beabstandet sein, sie können aber auch teilweise überlappen. Jedenfalls gibt es zwei Schichten, die das Aufnahmevolumen begrenzen; dies sind die Schichten S1 und S7. Diese Schichten werden in dieser Beschreibung auch als äußere Schichten bezeichnet. Die übrigen, inneren Schichten S2, S3, S4, S5 und S6 haben jeweils zwei unmittelbar benachbarte Schichten (auch als nächste Nachbarn bezeichnet). S2 hat als unmittelbar benachbarte Schichten die Schichten S1 und S3, S3 hat als unmittelbar benachbarte Schichten die Schichten S2 und S4 und so fort. Dabei bedeutet der Begriff "unmittelbar benachbart" nicht, dass die Schichten unmittelbar aneinander angrenzen; wie bereits erläutert können unmittelbar benachbarte Schichten auch überlappen oder voneinander beabstandet sein. Der Begriff "unmittelbar benachbart" soll vielmehr darauf hinweisen, dass es keine Schicht gibt, die örtlich näher an einer betrachteten Schicht liegt als die unmittelbar benachbarten Schichten. Dabei werden nur Schichten betrachtet, von denen ein Tomogramm erzeugt wird.

Allgemein gibt es *n* Schichten, wobei *n* eine natürliche Zahl ist, die größer oder gleich 2 ist. Es gibt 2 äußere Schichten und n-2 innere Sichten. Die Schichten S1, ..., Sn sind in einer räumlichen Abfolge parallel zueinander angeordnet, wobei die räumliche Abfolge durch die Indizes 1, ... , n wiedergegeben wird.

Bei konventionellen radiologischen Untersuchungen werden die Schichten üblicherweise nacheinander abgescannt, d.h. in der Reihenfolge S1, S2, S3, S4, S5, S6, S7 oder in der Reihenfolge S7, S6, S5, S4, S3, S2, S1. Die Begriffe "Abscannen" oder "Scannen" werden in dieser Beschreibung synonym zu dem Begriff "ein Tomogramm erzeugen" verwendet.

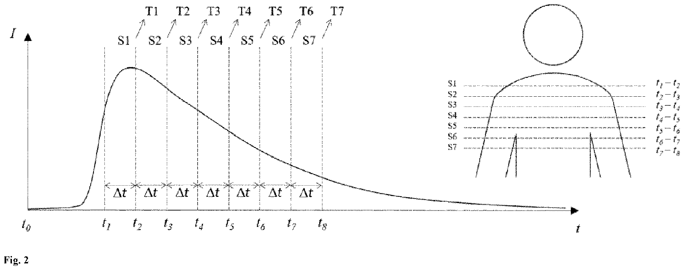

Fig. 2 zeigt schematisch die Erzeugung von Tomogrammen in einer konventionellen radiologischen Untersuchung entlang eines Zeitstrahls. Die Abszisse (x-Achse) gibt die Zeit *t* an. Der Zeitpunkt *to* kennzeichnet die Gabe eines Kontrastmittels; zum Zeitpunkt *to* wird dem Untersuchungsobjekt ein Kontrastmittel verabreicht. Auf der Ordinate (y-Achse) ist die Intensität I eines Signals, das auf das Kontrastmittel im Aufnahmevolumen zurückzuführen ist, aufgetragen. Die Kurve gibt die Kontrastverstärkung wieder, die durch das Kontrastmittel im Aufnahmevolumen hervorgerufen wird. Zum Zeitpunkt *to* befindet sich noch kein Kontrastmittel im Aufnahmevolumen; es dauert eine gewisse Zeit, bis das Kontrastmittel nach der Applikation (z.B. in Form eines Bolus in eine Armvene) in dem Aufnahmevolumen angekommen ist. Zum Zeitpunkt *t₁* liegt bereits eine signifikante Kontrastverstärkung, hervorgerufen durch das Kontrastmittel im Aufnahmevolumen, vor. Zum Zeitpunkt *t₁* wird daher ein erstes Tomogramm T1 erzeugt. Die Aufnahme eines Tomogramms nimmt selbst eine gewisse Zeit in Anspruch. Im vorliegenden Beispiel beträgt die Zeit zum Erzeugen eines Tomogramms Δ*t*. Im vorliegenden Beispiel wird unmittelbar nach der Erzeugung eines Tomogramms mit der Erzeugung eines nächsten Tomogramms begonnen. Es wird in der Zeit zwischen *t₁* und *t₂* also das Tomogramm T1 von der Schicht S1 erzeugt. In der Zeit zwischen *t₁* und *t₂* wird das Tomogramm T2 von der Schicht S2 erzeugt; in der Zeit zwischen *t₂* und *t₃* wird das Tomogramm T3 von der Schicht S3 erzeugt und so fort.

Wie in Fig. 2 beispielhaft zu erkennen ist, erreicht die Kontrastverstärkung I kurz vor Erreichen des Zeitpunkts *t₂* ihr Maximum und sinkt dann kontinuierlich ab. Das Absinken wird dadurch verursacht, dass das Kontrastmittel allmählich aus dem Aufnahmevolumen ausgetragen wird. Dies führt dazu, dass die Tomogramme, die innerhalb einer späteren Zeitspanne erzeugt werden, eine geringere Kontrastverstärkung aufweisen als diejenigen Tomogramme, die innerhalb einer früheren Zeitspanne erzeugt werden.

Werden die Tomogramme in der Reihenfolge der Schichtabfolge (S1, S2, S3, S4, S5, S6, S7), d.h. in der Reihenfolge T1, T2, T3, T4, T5, T6, T7 erzeugt, ist die durch Kontrastmittel hervorgerufene Kontrastverstärkung in den "unteren" Schichten (S7 und aufwärts) geringer als die Kontrastverstärkung in den "oberen" Schichten (S1 und abwärts). Tomogramme von Schichten, die aufgrund einer zunehmenden Austragung von Kontrastmittel aus dem Aufnahmevolumen eine geringere Kontrastverstärkung aufweisen als Tomogramme von Schichten, die weniger von der Austragung betroffen sind, werden in dieser Beschreibung auch als kontrastarme Tomogramme bezeichnet. Umgekehrt werden diejenigen Tomogramme von Schichten, die weniger von der Austragung betroffen sind, als kontrastreiche Tomogramme bezeichnet. Im Fall der in Fig. 2 exemplarisch dargestellten radiologischen Untersuchung konzentrieren sich die kontrastreichen Tomogramme auf den oberen Bereich des Oberkörpers des Untersuchungsobjekts, während sich die kontrastarmen Tomogramme auf den unteren Bereich des Oberkörpers des Untersuchungsobjekts konzentrieren. Dies führt dazu, dass die Bildqualität im unteren Bereich des Oberkörpers des Untersuchungsobjekts gegenüber jener im oberen Bereich des Oberkörpers des Untersuchungsobjekts schlechter ist, weil die aufgenommenen Tomogramme einen geringeren Kontrast aufweisen.

Bei der Erzeugung von radiologischen Aufnahmen mit einer vergleichsweise langen Scanzeit unter Verwendung eines Kontrastmittels führt die sequentielle Erzeugung von Tomogrammen dazu, dass in der Reihenfolge später aufgenommene Tomogramme einen geringeren Kontrast und somit eine schlechtere Bilddefinition aufweisen.

Erfindungsgemäß wird dieses Problem dadurch gelöst, dass Kontrastinformationen von einem kontrastreichen Tomogramm auf ein kontrastarmes Tomogramm übertragen werden.

Zudem werden Tomogramme vorzugsweise nicht in der Reihenfolge der Schichtabfolge erzeugt, sondern in einer Reihenfolge, bei der die Schichten der kontrastreichen Tomogramme möglichst gleichverteilt im Aufnahmevolumen vorliegen und die Schichten der kontrastarmen Tomogramme zwischen den Schichten der kontrastreichen Tomogramme liegen.

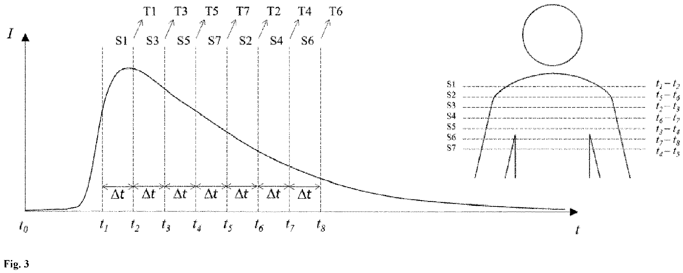

In einer bevorzugten Ausführungsform werden bei einer Anzahl von n Schichten S1, S2, ..., Sn zunächst die Tomogramme T1, T3, T5, ... und dann die Tomogramme T2, T4, T6, ... erzeugt, wobei ein Tomogramm T*ᵢ* jeweils die Schicht Si repräsentiert, wobei *i* ein Index ist, der die Werte von 1 bis *n* annimmt und n eine ungerade Zahl größer als 2 ist. Mit anderen Worten: es werden Tomogramme von den Schichten mit ungeraden Indizes in auf- oder absteigender Reihenfolge und anschließend Tomogramme von den Schichten mit geraden Indizes in auf- oder absteigender Reihenfolge erzeugt. Dies ist schematisch und beispielhaft in Fig. 3 dargestellt. Wie in Fig. 2 ist in Fig. 3 in einer grafischen Auftragung die Intensität *I* eines Messsignals der radiologischen Untersuchung, das auf die Anwesenheit von Kontrastmittel im Aufnahmevolumen zurückzuführen ist, als Funktion der Zeit dargestellt. Es werden von den unmittelbar benachbarten Schichten in dem Aufnahmevolumen S1, S2, ..., S7 die Tomogramme T1, T2, ..., T7 erzeugt. Die Tomogramme werden jedoch nicht in der Reihenfolge erzeugt, in der die jeweiligen Schichten in dem Aufnahmevolumen nebeneinander liegen, sondern in der Reihenfolge T1, T3, T5, T7, T2, T4, T6.

Eine alternative Reihenfolge ist die Reihenfolge T7, T5, T3, T1, T6, T4, T2.

Eine weitere alternative Reihenfolge ist die Reihenfolge T1, T3, T5, T7, T6, T4, T2.

Eine weitere alternative Reihenfolge ist die Reihenfolge T7, T5, T3, T7, T2, T4, T6.

Vorzugsweise ist die Anzahl der Tomogramme, die erzeugt werden, eine ungerade Zahl.

In einer weiteren Ausführungsform werden, bei einer ungeraden Anzahl n an Schichten mit den Indizes 1, 2, ..., n, die Schichten in einer Reihenfolge gemäß den folgenden Regeln gescannt:
(i) Es werden zunächst Tomogramme von den Schichten mit ungeradzahligen Indizes und dann Tomogramme von den Schichten mit geradzahligen Indizes erzeugt. Eine Schicht, von der ein Tomogramm erzeugt worden ist, wird als gescannte Schicht bezeichnet. Eine gescannte Schicht erhält eine Kennnummer; die Kennnummer gibt an, an welcher Stelle der Reihenfolge die Schicht gescannt wird.
(ii) Es werden zunächst Tomogramme von den zwei äußersten Schichten in der Reihenfolge S1, Sn oder S*n*, S1 erzeugt.
(iii) Anschließend wird die Lücke mit dem größten Abstand zwischen zwei gescannten Schichten identifiziert. Eine Lücke ist ein Bereich zwischen zwei gescannten Schichten, in denen noch nicht gescannte Schichten liegen. Gibt es mehrere Lücken mit dem gleichen Abstand, wird für jede dieser Lücken die Summe der Kennnummern der gescannten Schichten, die die Lücke begrenzen, berechnet. Es wird diejenige Lücke gewählt, bei der die Summe der Kennnummern am größten ist. Gibt es mehrere solcher Lücken mit den gleichen größten Kennnummern, wird diejenige Lücke gewählt, die den größten Abstand zu der zuletzt gescannten Schicht aufweist. Gibt es mehrere Lücken mit einem größten Abstand zu der zuletzt gescannten Schicht, wird unter den entsprechenden Lücken diejenige Lücke ausgewählt, die den größten Abstand zu der Schicht aufweist, die unmittelbar vor der zuletzt gescannten Schicht gescannt worden ist (und so fort).
(iv) Es wird in einer Lücke diejenige Schicht gescannt, die am ehesten zu einer Halbierung der Lücke führt. Gibt es mehrere dieser Schichten, wird diejenige Schicht gewählt, die den größten Abstand zu der zuletzt gescannten Schicht aufweist.

Die Regel (i) hat Vorrang vor allen anderen Regeln. Die Regel (ii) hat Vorrang vor Regel (iii) und (iv). Die Regel (iii) hat Vorrang vor Regel (iv).

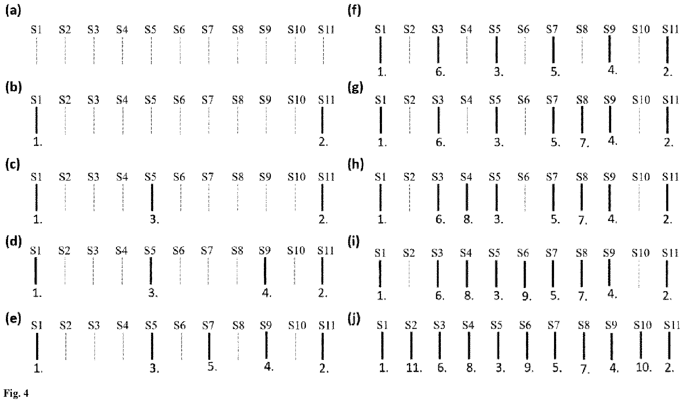

Fig. 4 veranschaulicht das Vorgehen beispielhaft und schematisch. In Fig. 4 (a) sind schematisch elf in einem Aufnahmevolumen aufeinander folgende Schichten S1, ..., S11 dargestellt. Die Schichten tragen die Indizes von 1 bis 11. Die Indizes geben die Reihenfolge an, in der die Schichten in dem Aufnahmevolumen örtlich aufeinander folgen. Keine der Schichten ist bisher gescannt worden. Nicht gescannte Schichten sind durch gestrichelte Linien gekennzeichnet.

Gemäß der Regel (i) werden zunächst die ungeradzahligen Schichten gescannt, bevor die geradzahligen Schichten gescannt werden. Mit anderen Worten: solange es noch mindestens eine nicht gescannte ungeradzahlige Schicht gibt, wird keine geradzahlige Schicht gescannt.

Gemäß der Regel (ii) werden zunächst die äußeren Schichten gescannt; entweder zuerst S1 und dann S11 oder umgekehrt.

In Fig. 4 (b) ist schematisch dargestellt, dass in diesem Beispiel zuerst S1 gescannt wird. S1 trägt die Kennnummer 1. Gescannte Schichten werden mit einer durchgezogenen fetten Linie gekennzeichnet. Nach S1 wird S11 gescannt. S11 erhält die Kennnummer 2.

Gemäß Regel (iii) wird nun diejenige Lücke gewählt, die den größten Abstand zwischen zwei gescannten Schichten aufweist. Wie in Fig. 4 (b) zu erkennen ist, gibt es nur zwei gescannte Schichten (S1, S11), die eine einzige Lücke einschließen. In dieser Lücke wird die nächste Schicht gescannt.

Gemäß Regel (iv) wird in einer Lücke diejenige Schicht identifiziert, die am ehesten zu einer Halbierung der Lücke führt. S6 liegt genau in der Mitte der Lücke; ein Scannen von S6 würde zu einer Halbierung der Lücke führen. Allerdings trägt die Schicht S6 einen geradzahligen Index (6) und so lange es noch ungeradzahlige Schichten gibt, werden diese bevorzugt (Regel (i)). Nach S6 würde ein Scannen der Schicht S5 oder der Schicht S7 am ehesten zu einer Halbierung der Lücke führen. Es gibt also zwei mögliche Schichten (S5, S7) in der Lücke, die gescannt werden könnten. Gemäß Regel (iv) wird von den beiden möglichen Schichten diejenige ausgewählt, die den weitesten Abstand zu der zuletzt gescannten Schicht aufweist. Die zuletzt gescannte Schicht ist S11. Der Abstand von S5 zu S11 ist größer als der Abstand von S7 zu S11. Dementsprechend wird als nächste zu scannende Schicht die Schicht S5 gescannt. Sie erhält in Fig. 4 (c) die Kennnummer 3.

In Fig. 4 (c) ist zu erkennen, dass sich nach dem Scannen der Schicht S5 zwei Lücken ergeben. Eine Lücke zwischen den Schichten S1 und S5 und eine weitere Lücke zwischen den Schichten S5 und S11. Die Lücke zwischen S5 und S11 ist die größere Lücke; sie wird gemäß Regel (ii) als nächstes ausgewählt. In der ausgewählten Lücke wird diejenige Schicht identifiziert, die am ehesten zu einer Halbierung der Lücke führt. S8 liegt genau in der Mitte zwischen S5 und S11; S8 ist jedoch eine Schicht mit einem geradzahligen Index (8), die gemäß Regel (i) noch nicht an der Reihe ist, da noch nicht gescannte ungeradzahlige Schichten vorhanden sind. Nach S8 würden S7 und S9 am ehesten zu einer Halbierung der Lücke führen. S9 hat den größeren Abstand zu der zuletzt gescannten Schicht (S5) und wird daher als nächstes gescannt. S9 ist in Fig. 4 (d) mit einer durchgezogenen Linie markiert und trägt die Kennnummer 4.

In Fig. 4 (d) ist zu erkennen, dass sich nach dem Scannen der Schicht S9 drei Lücken ergeben. Eine Lücke zwischen S1 und S5, eine Lücke zwischen S5 und S9 und eine Lücke zwischen S9 und S11. Die Lücke zwischen S9 und S11 ist kleiner als die anderen beiden Lücken und kommt daher zunächst nicht in Frage (Regel iii). Die Lücke zwischen S1 und S5 hat den gleichen Abstand wie die Lücke zwischen S5 und S9. Gemäß Regel (iii) wird nun für jede dieser Lücken die Summe der Kennnummern der begrenzenden Schichten berechnet. Die Lücke zwischen S1 und S5 wird durch die Schichten S1 und S5 begrenzt. Ihre Kennnummer sind 1 (S1) und 3 (S5). Die Summe ist vier. Die Lücke zwischen S5 und S9 wird durch die Schichten S5 und S9 begrenzt. Ihre Kennnummer sind 3 (S5) und 4 (S9). Die Summe ist sieben. Die Summe der Kennnummern der Schichten, die die Lücke zwischen S5 und S9 begrenzen, ist also größer als die Summer der Kennnummern der Schichten, die die Lücke zwischen S1 und S5 begrenzen. Die Lücke zwischen S5 und S9 wird ausgewählt. Innerhalb der Lücke wird diejenige Schicht ausgewählt, die am ehesten zu einer Halbierung der Lücke führt (Regel iv). Dies ist Schicht S7. Sie wird als nächstes gescannt; sie erhält in Fig. 4 (e) die Kennnummer 5.

In Fig. 4 (e) ist zu erkennen, dass es eine größte Lücke gibt, und zwar die Lücke zwischen S1 und S5. Sie wird als nächste ausgewählt (Regel (iii)). Innerhalb der Lücke ist die Schicht S3 diejenige Schicht, die am ehesten zu einer Halbierung der Lücke führt (Regel iv). Diese Schicht wird als nächstes gescannt; sie erhält in Fig. 4 (f) die Kennnummer 6.

In Fig. 4 (f) ist zu erkennen, dass in dem vorliegenden Beispiel bereits alle Schichten mit einem ungeradzahligen Index gescannt wurden. Es folgen also nun die Schichten mit den geradzahligen Indizes. Gemäß Regel (iii) wird die Lücke mit dem größten Abstand der die Lücke begrenzenden Schichten identifiziert. Die Lücken haben jedoch alle den gleichen Abstand. Also wird gemäß Regel (iii) die Lücke gewählt, bei der die Summe der Kennnummern der die Lücke begrenzenden Schichten am größten ist. Die Summe der Kennnummern der begrenzenden Schichten ist: 7 im Fall von S1/S3, 9 im Fall von S3/S5, 8 im Fall von S5/S7, 9 im Fall von S7/S9 und 6 im Fall von S9/S11. Es gibt also zwei mögliche Lücken. Von ihnen wird gemäß Regel (iii) diejenige Lücke gewählt, die den größten Abstand zur zuletzt gescannten Schicht aufweist; dies ist die Lücke S7/S9, da die zuletzt gescannte Schicht (S3) näher an der Schicht S3/S5 ist als an der Schicht S7/S9. Innerhalb der Lücke zwischen S7 und S9 gibt es nur noch eine nicht gescannte Schicht (S8); diese wird ausgewählt; sie erhält in Fig. 4 (g) die Kennnummer 7.

In Fig. 4 (g) verbleiben die Lücken zwischen S1 und S3, S3 und S5, S5 und S7 sowie S9 und S11, von denen bereits aus dem vorherigen Schritt bekannt ist, dass die Lücke zwischen S3 und S5 nun die größte Summe der Kennnummern aufweist (9). Innerhalb der Lücke zwischen S3 und S5 gibt es nur noch eine nicht gescannte Schicht (S4); diese wird ausgewählt; sie erhält in Fig. 4 (h) die Kennnummer 8.

In Fig, 4 (h) verbleiben die Lücken zwischen S1 und S3, S5 und S7 sowie S9 und S11, von denen bereits aus einem vorherigen Schritt bekannt ist, dass die Lücke zwischen S5 und S7 nun die größte Summe der Kennnummern aufweist (8). Innerhalb der Lücke zwischen S5 und S7 gibt es nur noch eine nicht gescannte Schicht (S6); diese wird ausgewählt; sie erhält in Fig. 4 (i) die Kennnummer 9.

In Fig, 4 (i) verbleiben die Lücken zwischen S1 und S3 sowie S9 und S11, von denen bereits aus einem vorherigen Schritt bekannt ist, dass die Lücke zwischen S1 und S3 nun die größte Summe der Kennnummern aufweist (7). Innerhalb der Lücke zwischen S1 und S3 gibt es nur noch eine nicht gescannte Schicht (S2); diese wird ausgewählt; sie erhält in Fig. 4 (i) die Kennnummer 10; die dann noch als letzte verbleibende Schicht (S2) erhält in Fig. 4 (i) die Kennnummer 11.

Die Scan-Reihenfolge lautet also in dem vorliegenden Beispiel S1, S11, S5, S9, S7, S3, S8, S4, S6, S10, S2.

Ist anstelle der Schicht S1 die Schicht S11 die zuerst gescannte Schicht (siehe Regel ii), ergibt sich nach den oben genannten Regeln die folgende Reihenfolge: S11, S1, S7, S3, S5, S9, S7, S8, S6, S2, S10.

Weitere Regeln und Reihenfolgen sind denkbar. Vorzugsweise wird eine Reihenfolge oder es werden Regeln für eine Reihenfolge zu Beginn des Trainings des Vorhersagemodells festgelegt und diese Reihenfolge/Regeln wird/werden beim Training, bei der Validierung und bei der Vorhersage mit Hilfe des trainierten Vorhersagemodells beibehalten.

Die Reihenfolge, in der die Schichten in einem Aufnahmevolumen gescannt werden, wird erfindungsgemäß so festgelegt, dass es mindestens ein Tomogramm von einer Schicht gibt, die zu zwei früher gescannten Schichten unmittelbar benachbart ist. Mit anderen Worten: es gibt mindestens ein Tomogramm von einer Sicht, das später erzeugt worden ist als die Tomogramme von den unmittelbar benachbarten Schichten.

Vorzugsweise gibt es eine Mehrzahl an Tomogrammen T*ⱼ*, wobei jedes Tomogramm der Mehrzahl an Tomogrammen eine Schicht S*ⱼ* repräsentiert, wobei jedes Tomogramm T*ⱼ* später erzeugt worden ist, als die Tomogramme T_{*j*-1} und T_{*j*+1} der unmittelbar zur Schicht S*ⱼ* benachbarten Schichten S_{*j*-1} und S_{*j*+1}, wobei j ein Index ist, der die Position der Schicht in einer Anordnung von Schichten in einem Aufnahmevolumen angibt.

Jedes Tomogramm T*ⱼ* einer Schicht S*ⱼ* ist kontrastärmer als die Tomogramme T_{*j*-1} und T_{*j*+1} der unmittelbar benachbarten Schichten S_{*j*-1} und S_{*j*+1}. Erfindungsgemäß wird für jedes kontrastarme Tomogramm T*ⱼ* ein künstliches, kontrastverstärktes Tomogramm T*ⱼ^{*}* erzeugt.

In einer erfindungsgemäßen Ausführungsform wird das künstliche, kontrastverstärkte Tomogramm T*ⱼ^{*}* auf Basis des kontrastarmen Tomogramms T*ⱼ* der Schicht S*ⱼ* und auf Basis der Tomogramme T_{*j*-1} und T_{*j*+1} der unmittelbar benachbarten Schichten S_{*j*-1} und S_{*j*+1} erzeugt.

Es ist aber auch denkbar, neben den Tomogrammen der unmittelbar benachbarten Schichten, Tomogramme von weiter entfernten Schichten zur Erzeugung eines künstlichen Tomogramms zu verwenden.

In einer weiteren erfindungsgemäßen Ausführungsform wird das künstliche, kontrastverstärkte Tomogramm T*ⱼ^{*}* auf Basis des kontrastarmen Tomogramms T*ⱼ* der Schicht S*ⱼ* und auf Basis einer Mehrzahl von Tomogrammen T_{*j*-k} und T_{*j*+k} der benachbarten Schichten S_{*j*-k} und S_{*j*+k} erzeugt, wobei k ein Index ist, der die Werte von 1 bis m durchläuft, wobei m eine ganze natürliche Zahl ist. Vorzugsweise ist m gleich 2 oder 3.

Das erfindungsgemäße Vorhersagemodell ist konfiguriert (trainiert), Kontrastinformationen von einem (kontrastreichen) Tomogramm auf ein (kontrastarmes) Tomogramm zu übertragen. Üblicherweise ist das kontrastreiche Tomogramm zeitlich vor dem kontrastarmen Tomogramm erzeugt worden; das kontrastarme Tomogramm ist üblicherweise in größerem Maße von einer Auswaschung (engl. *washout)* betroffen als das kontrastreiche Tomogramm. In einer bevorzugten Ausführungsform repräsentieren das kontrastreiche und das kontrastarme Tomogramme unmittelbar benachbarte Schichten in einem Aufnahmevolumen, d.h. das kontrastreiche Tomogramm repräsentiert eine erste Schicht nach Applikation eines Kontrastmittels und das kontrastarme Tomogramm repräsentiert eine zweite Schicht nach der Applikation des Kontrastmittels und die erste und die zweite Schicht sind unmittelbar benachbart und das kontrastreiche Tomogramm ist zeitlich vor dem kontrastarmen Tomogramm erzeugt worden.

Bei mehr als zwei Schichten / zwei Tomogrammen ist das Vorhersagemodell vorzugsweise konfiguriert (trainiert), die Kontrastverstärkung von Tomogrammen T_{*j*-k} und T_{*j*+k} benachbarter Schichten S_{*j*-k} und S_{*j*+k} auf das Tomogramm T*ⱼ* der Schicht S*ⱼ* zu übertragen, wobei k ein Index ist, der die Werte von 1 bis m durchläuft, wobei m eine ganze natürliche Zahl ist. Vorzugsweise ist m gleich 1, 2 oder 3.

Das Vorhersagemodell ist konfiguriert (trainiert), ein künstliches, kontrastverstärktes Tomogramm einer Schicht in einem Aufnahmevolumen auf Basis von mindestens zwei, vorzugsweise mindestens drei gemessenen Tomogrammen zu erzeugen. Die mindestens zwei gemessenen Tomogramme umfassen:
o ein erstes Tomogramm, wobei das erste Tomogramm eine erste Schicht innerhalb eines Aufnahmevolumens eines Untersuchungsobjekts nach der Applikation eines Kontrastmittels repräsentiert,
o ein zweites Tomogramm, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt wird/worden ist. Vorzugsweise sind die erste Schicht und die zweite Schicht unmittelbar zueinander benachbart.

Im Falle von mindestens drei gemessenen Tomogramme umfassen diese:
o ein erstes Tomogramm, wobei das erste Tomogramm eine erste Schicht innerhalb eines Aufnahmevolumens eines Untersuchungsobjekts nach der Applikation eines Kontrastmittels repräsentiert,
o ein zweites Tomogramm, wobei das zweite Tomogramm eine zweite Schicht innerhalb des Aufnahmevolumens des Untersuchungsobjekts nach der Applikation des Kontrastmittels repräsentiert,
o ein drittes Tomogramm, wobei das dritte Tomogramm eine dritte Schicht innerhalb des Aufnahmevolumens des Untersuchungsobjekts nach der Applikation des Kontrastmittels repräsentiert, wobei die dritte Schicht vorzugsweise zwischen der ersten und der zweiten Schicht liegt. Vorzugsweise sind die erste Schicht und die zweite Schicht unmittelbar zur dritten Schicht benachbart. Das dritte Tomogramm wird/wurde zeitlich nach dem ersten und dem zweiten Tomogramm erzeugt.

Erfindungsgemäß wird auf Basis der mindestens zwei gemessenen Tomogramme ein künstliches, kontrastverstärktes Tomogramm erzeugt, das eine Schicht mit einer höheren Kontrastverstärkung repräsentiert als das korrespondierende reale, gemessene Tomogramm.

Vorzugsweise wird auf Basis von mindestens drei gemessenen Tomogrammen ein künstliches, kontrastverstärktes Tomogramm erzeugt, das die dritte Schicht mit einer höheren Kontrastverstärkung repräsentiert als das dritte (reale, gemessene) Tomogramm.

Damit das erfindungsgemäße Vorhersagemodell die hier beschriebenen Vorhersagen machen kann, muss es vorab entsprechend konfiguriert werden.

Das Vorhersagemodell wird vorzugsweise mit Hilfe eines selbstlernenden Algorithmus in einem überwachten oder unüberwachten maschinellen Lernverfahren (engl.: *unsupervised learning)* trainiert (konfiguriert). Zum Lernen werden Trainingsdaten verwendet. Diese Trainingsdaten umfassen, von einer Vielzahl an Untersuchungsobjekten, für jedes Untersuchungsobjekt eine Mehrzahl von Tomogrammen eines Untersuchungsbereichs. Der Untersuchungsbereich (das Aufnahmevolumen) ist für alle Untersuchungsobjekte üblicherweise gleich (z.B. ein Teil eines menschlichen Körpers oder ein Organ oder ein Teil eines Organs). Die Tomogramme des Trainingsdatensatzes werden in dieser Beschreibung auch als Referenz-Repräsentationen bezeichnet.

Für jedes Untersuchungsobjekt umfassen die Trainingsdaten mindestens i) ein erstes Referenz-Tomogramm, wobei das erste Tomogramm eine erste Schicht innerhalb des Aufnahmevolumens nach einer Applikation eines Kontrastmittels repräsentiert, und ii) ein zweites Referenz-Tomogramm, wobei das zweite Referenz-Tomogramm eine zweite Schicht innerhalb des Aufnahmevolumens nach der Applikation des Kontrastmittels repräsentiert, wobei das zweite Referenz-Tomogramm, die zweite Schicht zu einem späteren Zeitpunkt repräsentiert als das erste Referenz-Tomogramm die erste Schicht und damit kontrastärmer ist als das erste Referenz-Tomogramm.

Vorzugsweise umfassen die Trainingsdaten für jedes Untersuchungsobjekt mindestens i) ein erstes Referenz-Tomogramm, wobei das erste Tomogramm eine erste Schicht innerhalb des Aufnahmevolumens nach einer Applikation eines Kontrastmittels repräsentiert, ii) ein zweites Referenz-Tomogramm, wobei das zweite Referenz-Tomogramm eine zweite Schicht innerhalb des Aufnahmevolumens nach der Applikation des Kontrastmittels repräsentiert, und iii) ein drittes Referenz-Tomogramm, wobei das dritte Referenz-Tomogramm eine dritte Schicht innerhalb des Aufnahmevolumens nach der Applikation des Kontrastmittels repräsentiert.

Die dritte Schicht in dem Aufnahmevolumen liegt zwischen der ersten Schicht und der zweiten Schicht und das dritte Referenz-Tomogramm wurde zeitlich nach dem ersten Referenz-Tomogramm und dem zweiten Referenz-Tomogramm erzeugt.

Bei der Verwendung von zwei Referenz-Tomogrammen für jedes Untersuchungsobjekt wird das Vorhersagemodell trainiert, für jedes Untersuchungsobjekt ein künstliches, kontrastverstärktes Tomogramm der zweiten Schicht zu erzeugen. Dazu werden das erste und das zweite Referenz-Tomogramm in das Vorhersagemodell eingegeben, und das Vorhersagemodell wird trainiert, ein künstliches Tomogramm auszugeben, das die zweite Schicht repräsentiert, das aber eine im Vergleich zum zweiten gemessenen Referenz-Tomogramm erhöhte Kontrastverstärkung aufweist. Das Vorhersagemodell wird trainiert, Kontrastinformationen von dem ersten Referenz-Tomogramm auf das zweite Referenz-Tomogramm zu übertragen.

Bei der Verwendung von drei Referenz-Tomogrammen für jedes Untersuchungsobjekt wird das Vorhersagemodell trainiert, für jedes Untersuchungsobjekt ein künstliches, kontrastverstärktes Tomogramm der dritten Schicht zu erzeugen. Dazu werden das erste, das zweite und das eine dritte Referenz-Tomogramm in das Vorhersagemodell eingegeben, und das Vorhersagemodell wird trainiert, ein künstliches Tomogramm auszugeben, das die dritte Schicht repräsentiert, das aber eine im Vergleich zum gemessenen dritten Referenz-Tomogramm erhöhte Kontrastverstärkung aufweist. Das Vorhersagemodell wird trainiert, Kontrastinformationen von dem ersten und dem zweiten Referenz-Tomogramm auf das dritte Referenz-Tomogramm zu übertragen.

Bei der Verwendung von mehr als drei Referenz-Tomogrammen pro Untersuchungsobjekt wird das Vorhersagemodell trainiert, für jedes Untersuchungsobjekt ein künstliches, kontrastverstärktes Tomogramm einer definierten Schicht zu erzeugen. Die Referenz-Tomogramme umfassen ein Referenz-Tomogramm von der definierten Schicht, das üblicherweise eine geringere Kontrastverstärkung aufweist als die übrigen Referenz-Tomogramme von weiteren Schichten. Die gemessenen Referenz-Tomogramme werden in das Vorhersagemodell eingegeben, und das Vorhersagemodell wird trainiert, ein künstliches Tomogramm auszugeben, das die definierte Schicht repräsentiert, das aber eine im Vergleich zu dem gemessenen Referenz-Tomogramm der definierten Schicht erhöhte Kontrastverstärkung aufweist. Das Vorhersagemodell wird trainiert, Kontrastinformationen von den übrigen Referenz-Tomogrammen auf das gemessene Referenz-Tomogramm der definierten Schicht zu übertragen.

Der selbstlernende Algorithmus erzeugt beim maschinellen Lernen ein statistisches Modell, das auf den Trainingsdaten beruht. Das heißt, es werden nicht einfach die Beispiele auswendig gelernt, sondern der Algorithmus "erkennt" Muster und Gesetzmäßigkeiten in den Trainingsdaten. So kann das Vorhersagemodell auch unbekannte Daten beurteilen. Validierungsdaten können verwendet werden, um die Güte der Beurteilung unbekannter Daten zu prüfen.

Selbstlernende Systeme, die mittels überwachten oder unüberwachten Lernens trainiert werden, sind vielfältig im Stand der Technik beschrieben (siehe z.B. G. Bonaccorso: *Hands-On Unsupervised Learning with Python,* Packt Publishing, 2019, ISBN: 978-1789348279).

Vorzugsweise ist das Vorhersagemodell ein künstliches neuronales Netz oder umfasst mindestens ein solches.

Ein künstliches neuronales Netzwerk umfasst mindestens drei Schichten von Verarbeitungselementen: eine erste Schicht mit Eingangsneuronen (Knoten), eine N-te Schicht mit mindestens einem Ausgangsneuron (Knoten) und N-2 innere Schichten, wobei N eine natürliche Zahl und größer als 2 ist.

Die Eingangsneuronen dienen zum Empfangen von gemessenen Tomogrammen. Die Ausgangsneuronen dienen dazu, künstliche Tomogramme auszugeben.

Die Verarbeitungselemente der Schichten zwischen den Eingangsneuronen und den Ausgangsneuronen sind in einem vorbestimmten Muster mit vorbestimmten Verbindungsgewichten miteinander verbunden.

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabedaten auf gegebene Ausgabedaten angestrebt. Die Qualität der Abbildung wird durch eine Fehlerfunktion beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte .

Im trainierten Zustand enthalten die Verbindungsgewichte zwischen den Verarbeitungselementen Informationen bezüglich der Beziehung zwischen gemessenen und künstlich erzeugten Tomogrammen, die verwendet werden können, um künstliche Tomogramme auf Basis von neuen, nicht während des Trainings verwendeten Tomogrammen erzeugen zu können.

Eine Kreuzvalidierungsmethode kann verwendet werden, um die Daten in Trainings- und Validierungsdatensätze aufzuteilen. Der Trainingsdatensatz wird beim Backpropagation-Training der Netzwerkgewichte verwendet. Der Validierungsdatensatz wird verwendet, um zu überprüfen, mit welcher Vorhersagegenauigkeit sich das trainierte Netzwerk auf unbekannte Daten anwenden lässt.

In einer besonders bevorzugten Ausführungsform umfasst das zum Trainieren verwendete Modell ein generatives, gegnerisches Netzwerk (engl.: *generative adversial network,* Abkürzung: GAN). Ein solches GAN umfasst üblicherweise zwei künstliche neuronale Netze, ein erstes Netz und ein zweites Netz. Das erste Netz wird oftmals auch als Generator bezeichnet. Das zweite Netz wird oftmals auch als Diskriminator bezeichnet. Der Generator und der Diskriminator werden gemeinsam trainiert und stehen dabei in einem Wettstreit: der Generator erzeugt ein künstliches Tomogramm und der Diskriminator soll das künstliche Tomogramm von einem realen Tomogramm unterscheiden. Der Generator wird trainiert, künstliche Tomogramme zu erzeugen, die der Diskriminator nicht von realen Tomogrammen unterscheiden kann und der Diskriminator wird trainiert, die zunehmend besser werdenden künstlichen Tomogramme zunehmend besser von realen Tomogrammen zu unterscheiden.

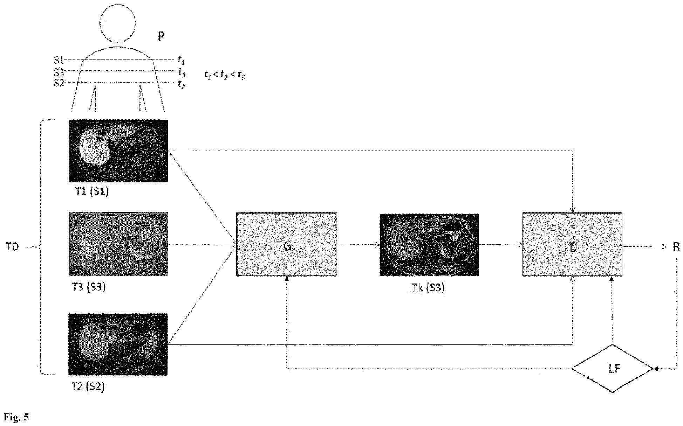

Das Prinzip ist schematisch in Fig. 5 dargestellt. Zum Trainieren umfasst das Vorhersagemodell ein erstes künstliches neuronales Netzwerk, den Generator G, und ein zweites künstliches neuronales Netzwerk, den Diskriminator D. Die Trainingsdaten TD zum Trainieren der beiden Netzwerke umfassen für eine Vielzahl an Personen P (in Fig. 5 ist aus Gründen der Übersichtlichkeit nur eine einzelne Person schematisch dargestellt), ein erstes Tomogramm T1, ein zweites Tomogramm T2 und ein drittes Tomogramm T3. Das erste Tomogramm T1 repräsentiert eine erste Schicht S1, das zweite Tomogramm T2 repräsentiert eine zweite Schicht S2 und das dritte Tomogramm T3 repräsentiert eine dritte Schicht S3 nach der Applikation eines Kontrastmittels. Die Schicht S3 liegt zwischen den Schichten S1 und S2. Die Tomogramme wurden durch Scannen der Schichten in einem radiologischen Untersuchungsverfahren nach der Applikation eines Kontrastmittels erzeugt. Die Schichten S1 und S2 wurden zeitlich vor der Schicht S3 gescannt. Mit anderen Worten: das Tomogramm T3 wurde nach den Tomogrammen T1 und T2 erzeugt. Da das Tomogramm T3 später als die Tomogramme T1 und T2 erzeugt worden ist, weist es in Folge der fortgeschrittenen Auswaschung von Kontrastmittel eine geringere Kontrastverstärkung auf als die Tomogramme T1 und T2. Mit anderen Worten: T3 ist - in Vergleich zu T1 und T2 - kontrastarm; T1 und T2 sind - in Vergleich zu T3 - kontrastreich.

Das erste Tomogramm T1, das zweite Tomogramm T2 und das dritte Tomogramme T3 werden dem Generator G zugeführt. Der Generator ist konfiguriert, auf Basis dieser Eingabedaten ein künstliches Tomogramm Tk zu erzeugen, das die dritte Schicht repräsentiert. Der Generator G wird trainiert, ein künstliches Tomogramm Tk zu erzeugen, das eine höhere Kontrastverstärkung als das dritte Tomogramm T3 aufweist. Der Generator G wird trainiert, Kontrastinformationen von dem ersten Tomogramm T1 und dem zweiten Tomogramm T2 auf das Tomogramm T3 zu übertragen und dadurch das künstliche, kontrastverstärkte Tomogramm Tk zu erzeugen. Der Diskriminator empfängt reale kontrastreiche Tomogramme T1 und T2 sowie künstlich erzeugte, kontrastverstärkte Tomogramme Tk und ist konfiguriert, für ein empfangenes Tomogramm anzugeben, ob es sich um ein künstliches Tomogramm oder um ein reales Tomogramm handelt. Der Diskrimintor führt also eine Klassifikation durch; er ordnet jedes empfangene Tomogramm einer von zwei Klassen zu, eine erste Klasse mit realen Tomogrammen und eine zweite Klasse mit künstlich erzeugten Tomogrammen.

Das Ergebnis der Klassifikation ist ein Klassifikationsergebnis R. Da für jedes der dem Diskriminator zugeführten Tomogramme bekannt ist, ob es sich um reales oder ein künstlich erzeugtes Tomogramm handelt, kann das Ergebnis der Klassifikation bewertet werden. Die Bewertung erfolgt mit Hilfe einer Verlustfunktion LF (engl.: *loss function).* Das Ergebnis der Bewertung fließt dann sowohl in das Training des Generators G als auch in das Training des Diskriminators D ein, die beide trainiert werden, ein verbessertes Ergebnis zu liefern: im Fall des Generators G ein künstliches Tomogramm zu erzeugen, das der Diskriminator nicht von einem realen Tomogramm unterscheiden kann und im Fall des Diskriminators künstliche Tomogramme von realen Tomogrammen zu unterscheiden.

Ist das System umfassend Generator und Diskriminator trainiert und erreichen die beiden Netze eine vordefinierte (gewünschte) Genauigkeit, kann aus dem System das erfindungsgemäße Vorhersagemodell gewonnen werden. Dazu kann das System auf den Generator reduziert werden; der Diskriminator ist zu Vorhersage nicht mehr erforderlich. Der Generator hat gelernt, auf Basis von mindestens zwei, vorzugsweise mindestens drei Tomogrammen ein künstliches Tomogramm zu erzeugen, das nicht oder nur schwer von einem realen Tomogramm unterschieden werden kann.

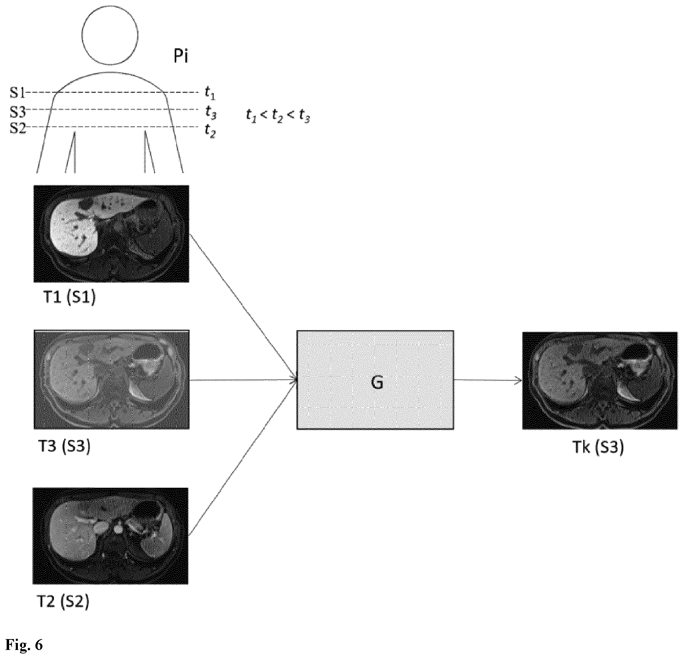

Fig. 6 zeigt beispielhaft und schematisch das erfindungsgemäße Vorhersagemodell. Es handelt sich dabei um den in Fig. 5 gezeigten Generator G, der anhand einer Vielzahl an Referenz-Tomogrammen in einem unüberwachten Lernverfahren wie in Bezug auf Fig, 5 beschrieben, trainiert worden ist.

In dem vorliegenden Beispiel werden dem Generator G zur Vorhersage mindestens drei Tomogramme zugeführt, ein erstes Tomogramm T1, ein zweites Tomogramm T2 und ein drittes Tomogramm T3. Das erste Tomogramm T1 repräsentiert eine erste Schicht S1 in einem Aufnahmevolumen einer Person Pi, das zweite Tomogramm T2 repräsentiert eine zweite Schicht S2 in dem Aufnahmevolumen der Person Pi und das dritte Tomogramm T3 repräsentiert eine dritte Schicht S3 in dem Aufnahmevolumen der Person Pi. Die Schicht S3 liegt zwischen den Schichten S1 und S2. Das erste Tomogramm T1 wurde zu einem Zeitpunkt *t*₁ nach Applikation eines Kontrastmittels erzeugt. Das zweite Tomogramm T2 wurde zu einem Zeitpunkt *t*₂ nach Applikation des Kontrastmittels erzeugt. Das dritte Tomogramm T3 wurde zu einem Zeitpunkt *t₃* nach Applikation des Kontrastmittels erzeugt. Der Zeitpunkt *t*₃ ist den Zeitpunkten *t*₂ und *t*₁ zeitlich nachgelagert.

Der Generator G erzeugt aus den empfangenen Tomogrammen ein künstliches Tomogramm Tk, das die dritte Schicht S3 repräsentiert. Das künstliche Tomogramm weist eine höhere Kontrastverstärkung als das dritte Tomogramm T3 auf.

In einer bevorzugten wird zum Trainieren des Vorhersagemodells ein System aus künstlichen neuronalen Netzen verwendet, das einem CycleGAN oder auf einer Pix2Pix Architektur basiert.

Weitere Informationen zu generativen, gegnerischen Netzwerken sind in Veröffentlichungen zu diesem Thema zu finden (siehe z.B.: N. K. Manaswi: Generative Adversarial Networks with Industrial Use Cases, BPB PUBN Verlag, 2020, ISBN: 9789389423853; WO2020/246996, WO2020/242572, EP3785231, WO2021/049784, EP3767590, US20190295302)

Das erfindungsgemäße Verfahren kann mit Hilfe eines Computersystems ausgeführt werden.

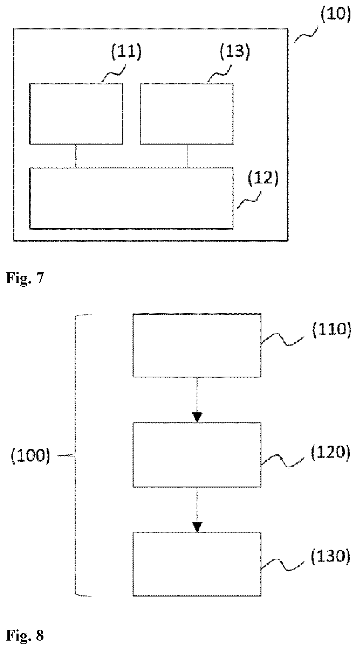

Fig. 7 zeigt schematisch und beispielhaft eine Ausführungsform des erfindungsgemäßen Computersystems. Das Computersystem (10) umfasst eine Empfangseinheit (11), eine Steuer- und Recheneinheit (12) und eine Ausgabeeinheit (13).

Ein "Computersystem" ist ein System zur elektronischen Datenverarbeitung, das mittels programmierbarer Rechenvorschriften Daten verarbeitet. Ein solches System umfasst üblicherweise eine Steuer- und Recheneinheit, oftmals auch als "Computer" bezeichnet, diejenige Einheit, die einen Prozessor zur Durchführung logischer Operationen und einen Arbeitsspeicher zum Laden eines Computerprogramms umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Joystick, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Eingaben in das Computersystem (zum Bespiel zur Steuerung durch einen Nutzer) erfolgen über Eingabemittel wie beispielsweise eine Tastatur, eine Maus, ein Mikrofon, ein berührungsempfindliches Display und/oder dergleichen. Ausgaben erfolgen über die Ausgabeeinheit (13), die insbesondere ein Monitor (Bildschirm), ein Drucker und/oder ein Datenspeicher sein kann.

Das erfindungsgemäße Computersystem (10) ist konfiguriert, aus mindestens zwei, vorzugsweise mindestens drei realen Tomogrammen eines Untersuchungsbereichs eines Untersuchungsobjekts, die den Untersuchungsbereich nach Applikation eines Kontrastmittels repräsentieren, ein künstliches, kontrastverstärktes Tomogramm zu erzeugen.

Die Steuer- und Recheneinheit (12) dient der Steuerung der Empfangseinheit (11) und der Ausgabeeinheit (13), der Koordinierung der Daten- und Signalflüsse zwischen den verschiedenen Einheiten, der Prozessierung von Repräsentationen des Untersuchungsbereichs der Erzeugung von künstlichen Tomogrammen. Es ist denkbar, dass mehrere Steuer- und Recheneinheiten vorhanden sind.

Die Empfangseinheit (11) dient zum Empfang von realen Tomogrammen. Die Tomogramme können beispielsweise von einem Magnetresonanztomographen übermittelt werden oder von einem Computertomografen übermittelt werden oder aus einem Datenspeicher ausgelesen werden. Der Magnetresonanztomograph oder der Computertomografkönnen ein Bestandteil des erfindungsgemäßen Computersystems sein. Denkbar ist aber auch, dass das erfindungsgemäße Computersystem ein Bestandteil eines Magnetresonanztomographen oder eines Computertomografen ist. Die Übermittlung von Tomogrammen kann über eine Netzwerkverbindung oder eine direkte Verbindung erfolgen. Die Übermittlung von Tomogrammen kann über eine Funkverbindung (WLAN, Bluetooth, Mobilfunk und/oder dergleichen) und/oder kabelgebunden erfolgen. Es ist denkbar, dass mehrere Empfangseinheiten vorhanden sind. Auch der Datenspeicher kann ein Bestandteil des erfindungsgemäßen Computersystems sein oder mit diesem z.B. über ein Netzwerk verbunden sein. Es ist denkbar, dass mehrere Datenspeicher vorhanden sind.

Von der Empfangseinheit werden die Tomogramme ggf. weitere Daten (wie beispielsweise Informationen zum Untersuchungsobjekt, Aufnahmeparameter und/oder dergleichen) empfangen und an die Steuer- und Recheneinheit übermittelt.

Die Steuer- und Recheneinheit ist konfiguriert, anhand der empfangenen Daten künstliche Tomogramme zu erzeugen.

Über die Ausgabeeinheit (13) können die künstlichen Tomogramme angezeigt werden (zum Beispiel auf einem Monitor), ausgegeben werden (z.B. über einen Drucker) oder in einem Datenspeicher gespeichert werden. Es ist denkbar, dass mehrere Ausgabeeinheiten vorhanden sind.

Fig. 8 zeigt beispielhaft und schematisch eine bevorzugte Ausführungsform des erfindungsgemäßen Verfahrens zum Trainieren eines Vorhersagemodells in Form eines Ablaufdiagramms.

Das Verfahren (100), umfassend die Schritte:
(110) Empfangen eines Trainingsdatensatzes, wobei der Trainingsdatensatz für jedes Referenzobjekt einer Vielzahl von Referenzobjekten eine Mehrzahl an realen Referenz-Tomogrammen umfasst,
   o wobei die Referenz-Tomogramme ein Aufnahmevolumen des Referenzobjekts nach der Applikation eines Kontrastmittels repräsentieren,
   o wobei die Referenz-Tomogramme für jedes Referenzobjekts mindestens drei Tomogramme umfassen: ein erstes Referenz-Tomogramm, ein zweites Referenz-Tomogramm und ein drittes Referenz-Tomogramm,
      ▪ wobei das erste Tomogramm eine erste Schicht innerhalb des Aufnahmevolumens repräsentiert,
      ▪ wobei das zweite Tomogramm eine zweite Schicht innerhalb des Aufnahmevolumens repräsentiert,
      ▪ wobei das dritte Tomogramm eine dritte Schicht innerhalb des Aufnahmevolumens repräsentiert,
         - wobei die dritte Schicht in dem Aufnahmevolumen zwischen der ersten Schicht und der zweiten Schicht liegt,
         - wobei das dritte Tomogramm zeitlich nach dem ersten Tomogramm und dem zweiten Tomogramm erzeugt worden ist,
(120) Trainieren des Vorhersagemodells, wobei das Vorhersagemodell zum Trainieren zwei künstliche neuronale Netze umfasst, ein erstes Netz und ein zweites Netz,
   o wobei das erste Netz konfiguriert ist, für jedes Referenzobjekt das erste, das zweite und das dritte Tomogramm zu empfangen und ein künstliches Tomogramm auf Basis der empfangenen Tomogramme zu erzeugen, wobei das künstliche Tomogramm die dritte Schicht in dem Aufnahmevolumen repräsentiert
   o wobei das zweite Netz konfiguriert ist, das dritte Tomogramm und/oder das künstliche Tomogramm zu empfangen und für das empfangene Tomogramm eine Aussage zu treffen, ob das empfangene Tomogramm ein reales Tomogramm oder ein künstlich erzeugtes Tomogramm ist,
   o wobei das erste Netz und das zweite Netz in einem unüberwachten Lernverfahren gemeinsam trainiert werden, wobei das erste Netz trainiert wird, künstliche Tomogramme zu erzeugen, die von dem zweiten Netz nicht als künstlich eingeschätzt werden und das zweite Netz trainiert wird, künstliche Tomogramme von realen Tomogrammen zu unterscheiden,
(130) Speichern zumindest des ersten Netzes und/oder Zuführen des ersten Netzes einem Verfahren zur Vorhersage eines künstlichen Tomogramms für ein Untersuchungsobjekt.

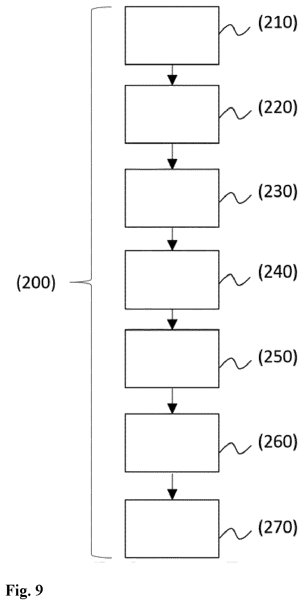

Fig. 9 zeigt beispielhaft und schematisch eine bevorzugte Ausführungsform des erfindungsgemäßen Verfahrens zum Erzeugen eines künstlichen, kontrastverstärkten Tomogramms in Form eines Ablaufdiagramms.

Das Verfahren (200) umfassend die Schritte:
(210) Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
(220) Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert,
(230) Empfangen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
(240) Bereitstellen eines Vorhersagemodells, wobei das Vorhersagemodell in einem unüberwachten Lernverfahren anhand eines Trainingsdatensatzes trainiert worden ist,
   ▪ wobei der Trainingsdatensatz für eine Vielzahl an Referenzobjekten jeweils ein erstes Referenz-Tomogramm, ein zweites Referenz-Tomogramm und ein drittes Referenz-Tomogramm umfasst,
      - wobei die Referenz-Tomogramme Schichten in einem Aufnahmevolumen des Referenzobjekts repräsentieren,
      - wobei das erste Referenz-Tomogramm eine erste Schicht innerhalb des Aufnahmevolumens repräsentiert,
      - wobei das zweite Tomogramm eine zweite Schicht innerhalb des Aufnahmevolumens repräsentiert,
      - wobei das dritte Tomogramm eine dritte Schicht innerhalb des Aufnahmevolumens repräsentiert,
         o wobei die dritte Schicht in dem Aufnahmevolumen zwischen der ersten Schicht und der zweiten Schicht liegt,
         o wobei das dritte Tomogramm zeitlich nach dem ersten Tomogramm und dem zweiten Tomogramm erzeugt worden ist,
   ▪ wobei das Vorhersagemodell zum Trainieren zwei künstliche neuronale Netze umfasst, ein erstes Netz und ein zweites Netz,
      - wobei das erste Netz konfiguriert ist, für jedes Referenzobjekt das erste, das zweite und das dritte Tomogramm zu empfangen und ein künstliches Tomogramm auf Basis der empfangenen Tomogramme zu erzeugen, wobei das künstliche Tomogramm die dritte Schicht in dem Aufnahmevolumen repräsentiert,
      - wobei das zweite Netz konfiguriert ist, das dritte Tomogramm und/oder das künstliche Tomogramm zu empfangen und für das empfangene Tomogramm eine Aussage zu treffen, ob das empfangene Tomogramm ein reales Tomogramm oder ein künstlich erzeugtes Tomogramm ist,
      - wobei das erste Netz und das zweite Netz in einem unüberwachten Lernverfahren gemeinsam trainiert worden sind, wobei das erste Netz trainiert worden ist, künstliche Tomogramme zu erzeugen, die von dem zweiten Netz nicht als künstlich eingeschätzt werden und das zweite Netz trainiert wird, künstliche Tomogramme von realen Tomogrammen zu unterscheiden,
(250) Zuführen des ersten, zweiten und dritten Tomogramms dem ersten neuronalen Netz,
(260) Empfangen eines künstlichen Tomogramms, wobei das künstliche Tomogramm die dritte Schicht in dem Aufnahmevolumen repräsentiert,
(270) Ausgeben des künstlichen Tomogramms.

Weitere Ausführungsformen sind:
1. Verfahren zum Erzeugen eines künstlichen, kontrastverstärkten Tomogramms, umfassend die Schritte:
   o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
   o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert,
   o Empfangen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
   o Bereitstellen eines Vorhersagemodells, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
   o Zuführen des ersten, zweiten und dritten Tomogramms dem Vorhersagemodell,
   o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
   o Ausgeben des künstlichen Tomogramms.
2. Verfahren zum Erzeugen eines künstlichen, kontrastverstärkten Tomogramms, umfassend die Schritte:
   o Erzeugen einer Zahl n an Tomogrammen T1, ...., Tn, wobei n eine ganze ungerade Zahl größer als 2 ist, wobei jedes Tomogramm T1, ...., Tn jeweils eine Schicht S1, ..., Sn innerhalb eines Aufnahmevolumens eines Untersuchungsobjekts nach der Applikation eines Kontrastmittels repräsentiert, wobei die Schichten S1, ..., Sn planar sind und parallel zueinander angeordnet sind, wobei das Erzeugen der Tomogramme T1, ...., Tn, die folgenden Unterschritte umfasst:
      ▪ Erzeugen der Tomogramme T1 und Tn der Schichten S1 und Sn in der Reihenfolge T1, Tn oder in der Reihenfolge Tn, T1,
      ▪ anschließendes Erzeugen der Tomogramme T2 bis Tn-1 in einer Reihenfolge, bei der jedes erzeugte Tomogramm eine Schicht repräsentiert, die zum Zeitpunkt seiner Erzeugung jeweils in einem Bereich von Schichten liegt, von denen noch kein Tomogramm erzeugt worden ist, wobei jeder der Bereiche von jeweils zwei Schichten begrenzt wird, von denen bereits ein Tomogramm erzeugt worden ist,
   o Bereitstellen eines Vorhersagemodells, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
   o Zuführen zumindest eines ersten, zweiten und dritten Tomogramms dem Vorhersagemodell,
      ▪ wobei das erste und das zweite Tomogramm zeitlich vor dem dritten Tomogramm erzeugt worden sind (oder: wobei das dritte Tomogramm zeitlich nach dem ersten und dem zweiten Tomogramm erzeugt worden ist)
   o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
   o Ausgeben des künstlichen Tomogramms.
3. Verfahren zum Erzeugen eines künstlichen, kontrastverstärkten Tomogramms, umfassend die Schritte:
   ∘ Empfangen einer Zahl n an Tomogrammen T1, ...., Tn, wobei n eine ganze ungerade Zahl größer als 2 ist,
      ▪ wobei jedes Tomogramm T1, ...., Tn jeweils eine Schicht S1, ..., Sn innerhalb eines Aufnahmevolumens eines Untersuchungsobjekts nach der Applikation eines Kontrastmittels repräsentiert,
         - wobei die Schichten S1, ..., Sn parallel zueinander in einer räumlichen Abfolge angeordnet sind,
            o wobei die räumliche Abfolge durch die Indizes 1, ..., n angegeben wird,
      ▪ wobei die Tomogramme in einer Reihenfolge erzeugt worden sind, bei der zunächst die Tomogramme T2k+1 und dann die Tomogramme T2k erzeugt werden, wobei k ein Index ist, der die Werte von 0 bis (n-1)/2 durchläuft,
   o Bereitstellen eines Vorhersagemodells, wobei das Vorhersagemodell anhand eines Trainingsdatensatzes trainiert worden ist, Kontrastinformationen von jeweils zwei unmittelbar benachbarten Tomogrammen, die zu einem früheren Zeitpunkt erzeugt worden sind, auf Tomogramme, die zu einem späteren Zeitpunkt erzeugt worden sind, zu übertragen dabei ein künstliche, kontrastverstärkte Tomogramme zu erzeugen,
   o Zuführen der empfangenen Tomogramme dem Vorhersagemodell,
   o Empfangen einer Zahl (n-1)/2 von künstlichen Tomogrammen KT, wobei jedes künstliche KT₂ᵢ₊₁ die jeweilige Schicht S₂ᵢ₊₁ repräsentiert und auf Basis der Tomogramme T₂ᵢ und T₂ᵢ₊₂ erzeugt worden ist, wobei i ein Index ist, der die Zahlen von 0 bis k annehmen kann,
   o Ausgeben mindestens eines der künstlichen Tomogramme.
4. Verfahren zum Erzeugen eines künstlichen, kontrastverstärkten Tomogramms, umfassend die Schritte:
   o Empfangen einer Zahl n an Tomogrammen T1, ..., Tn, wobei n eine ganze ungerade Zahl größer als 1 ist, wobei jedes Tomogramm T1,..., Tn jeweils eine Schicht S1, ..., Sn innerhalb eines Aufnahmevolumens eines Untersuchungsobjekts nach der Applikation eines Kontrastmittels repräsentiert, wobei die Schichten S1, ..., Sn parallel zueinander in einer räumlichen Abfolge angeordnet sind, wobei die räumliche Abfolge durch die Indizes 1, ..., n angegeben wird,
      ▪ wobei jedes Tomogramm T2 bis Tn-1 zum Zeitpunkt seiner Erzeugung in einem jeweiligen Bereich von Schichten liegt, von denen noch kein Tomogramm erzeugt worden ist, wobei jeder der Bereiche von zwei Schichten begrenzt wird, von denen zu dem Zeitpunkt bereits ein Tomogramm erzeugt worden ist,
   o Bereitstellen eines Vorhersagemodells, wobei das Vorhersagemodell anhand eines Trainingsdatensatzes trainiert worden ist, auf Tomogramme von solchen Schichten, bei denen von den benachbarten Schichten Tomogramme zu einem früheren Zeitpunkt erzeugt worden sind, Kontrastinformationen zu übertragen und dabei ein künstliches kontrastverstärkte Tomogramme zu erzeugen,
   o Zuführen eines Tomogramms T*ⱼ* einer Schicht Sᵢ sowie einer Mehrzahl von Tomogrammen T_{*j*-k} und T_{*j*+k} der benachbarten Schichten S_{*j*-k} und S_{*j*+k} dem Vorhersagemodell, wobei k ein Index ist, der die Werte von 1 bis m durchläuft, wobei m eine ganze Zahl größer als 1 ist,
      ▪ wobei die Schicht S*ⱼ* zwischen den Schichten S_{*j*-k} und S_{*j*+k} liegt,
      ▪ wobei dem Vorhersagemodell nur jene Tomogramme zugeführt werden, die zeitlich vor dem Tomogramm T*ⱼ* erzeugt worden sind,
   ∘ Empfangen eines künstlichen Tomogramms von dem Vorhersagemodell, wobei das künstliche Tomogramm die Schicht S*ⱼ* in dem Aufnahmevolumen repräsentiert,
   ∘ Ausgeben des künstlichen Tomogramms.
5. Verfahren nach einer der Ausführungsformen 3 oder 4, wobei eine ungerade Zahl n an Tomogrammen T1, ..., Tn gemäß folgender Regeln erzeugt werden:
   (i) Tomogramme mit ungeradzahligen Indizes 1, 3, ..., n werden vor Tomogrammen mit geradzahligen Indizes 2, 4, ..., (n-1) erzeugt.
   (ii) Erzeugung der Tomogramme von den zwei äußersten Schichten in der Reihenfolge T1, Tn oder Tn, T1.
   (iii) Identifizierung einer Lücke mit dem größten Abstand zwischen zwei gescannten Schichten, wobei die Lücke ein Bereich zwischen zwei gescannten Schichten ist, in denen noch nicht gescannte Schichten liegen. Gibt es mehrere Lücken mit dem gleichen Abstand, wird für jede dieser Lücken die Summe der Kennnummern der gescannten Schichten, die die Lücke begrenzen, berechnet. Es wird diejenige Lücke gewählt, bei der die Summe der Kennnummern am größten ist. Gibt es mehrere solcher Lücken mit den gleichen größten Kennnummern, wird diejenige Lücke gewählt, die den größten Abstand zu der zuletzt gescannten Schicht aufweist. Gibt es mehrere Lücken mit einem größten Abstand zu der zuletzt gescannten Schicht, wird unter den entsprechenden Lücken diejenige Lücke ausgewählt, die den größten Abstand zu der Schicht aufweist, die unmittelbar vor der zuletzt gescannten Schicht aufweist (und so fort).
   (iv) Erzeugung des Tomogramms derjenigen Schicht in einer Lücke, die am ehesten zu einer Halbierung der Lücke führt. Gibt es mehrere dieser Schichten, wird diejenige Schicht gewählt, die den größten Abstand zu der zuletzt gescannten Schicht aufweist.
   wobei die Regel (i) Vorrang vor allen anderen Regeln hat, und wobei die Regel (ii) Vorrang vor Regel (iii) und (iv) hat, und wobei die Regel (iii) Vorrang vor Regel (iv) hat.
6. Verfahren gemäß einer der Ausführungsformen 1 bis 5, wobei das Vorhersagemodell beim Trainieren ein erstes künstliches neuronales Netzwerk, den Generator G, und ein zweites künstliches neuronales Netzwerk, den Diskriminator D, umfasst.
7. Verfahren gemäß einer der Ausführungsformen 1 bis 6, wobei das Vorhersagemodell beim Vorhersagen ein erstes künstliches neuronales Netzwerk, den Generator G, umfasst, wobei das Vorsagemodell ein zweites künstliches neuronales Netzwerk, den Diskriminator D, nicht umfasst.
8. Verfahren zum Trainieren eines Vorhersagemodells, umfassend die Schritte
   - Empfangen eines Trainingsdatensatzes, wobei der Trainingsdatensatz für jedes Referenzobjekt einer Vielzahl von Referenzobjekten eine Mehrzahl an Referenz-Tomogrammen umfasst,
      o wobei die Referenz-Tomogramme ein Aufnahmevolumen des Referenzobjekts nach der Applikation eines Kontrastmittels repräsentieren,
      o wobei die Referenz-Tomogramme für jedes Referenzobjekts mindestens drei Tomogramme umfassen: ein erstes Referenz-Tomogramm, ein zweites Referenz-Tomogramm und ein drittes Referenz-Tomogramm,
         ▪ wobei das erste Referenz-Tomogramm eine erste Schicht innerhalb des Aufnahmevolumens repräsentiert,
         ▪ wobei das zweite Referenz-Tomogramm eine zweite Schicht innerhalb des Aufnahmevolumens repräsentiert,
         ▪ wobei das dritte Referenz-Tomogramm eine dritte Schicht innerhalb des Aufnahmevolumens repräsentiert,
            - wobei die dritte Schicht in dem Aufnahmevolumen zwischen der ersten Schicht und der zweiten Schicht liegt,
            - wobei das dritte Referenz-Tomogramm zeitlich nach dem ersten Referenz-Tomogramm und dem zweiten Referenz-Tomogramm erzeugt worden ist,
   - Trainieren des Vorhersagemodells, wobei dem Vorhersagemodell das erste, das zweite und das dritte Referenz-Tomogramm zugeführt werden, wobei das Vorhersagemodell trainiert wird, Kontrastverstärkung von dem ersten und dem zweiten Referenz-Tomogramm auf das dritte Referenz-Tomogramm zu übertragen und ein künstliches Tomogramm zu erzeugen, das die dritte Schicht repräsentiert.
9. Verfahren zum Trainieren eines Vorhersagemodells umfassend die Schritte:
   o Empfangen eines Trainingsdatensatzes, wobei der Trainingsdatensatz für jedes Referenzobjekt einer Vielzahl von Referenzobjekten eine Mehrzahl an realen Referenz-Tomogrammen umfasst,
      ▪ wobei die Referenz-Tomogramme ein Aufnahmevolumen des Referenzobjekts nach der Applikation eines Kontrastmittels repräsentieren,
      ▪ wobei die Referenz-Tomogramme für jedes Referenzobjekts mindestens drei Tomogramme umfassen: ein erstes Referenz-Tomogramm, ein zweites Referenz-Tomogramm und ein drittes Referenz-Tomogramm,
         - wobei das erste Tomogramm eine erste Schicht innerhalb des Aufnahmevolumens repräsentiert,
         - wobei das zweite Tomogramm eine zweite Schicht innerhalb des Aufnahmevolumens repräsentiert,
         - wobei das dritte Tomogramm eine dritte Schicht innerhalb des Aufnahmevolumens repräsentiert,
            o wobei die dritte Schicht in dem Aufnahmevolumen zwischen der ersten Schicht und der zweiten Schicht liegt,
            o wobei das dritte Tomogramm zeitlich nach dem ersten Tomogramm und dem zweiten Tomogramm erzeugt worden ist,
   o Trainieren des Vorhersagemodells, wobei das Vorhersagemodell zum Trainieren zwei künstliche neuronale Netze umfasst, ein erstes Netz und ein zweites Netz,
      ▪ wobei das erste Netz konfiguriert ist, für jedes Referenzobjekt das erste, das zweite und das dritte Tomogramm zu empfangen und ein künstliches Tomogramm auf Basis der empfangenen Tomogramme zu erzeugen, wobei das künstliche Tomogramm die dritte Schicht in dem Aufnahmevolumen repräsentiert
      ▪ wobei das zweite Netz konfiguriert ist, das dritte Tomogramm und/oder das künstliche Tomogramm zu empfangen und für das empfangene Tomogramm eine Aussage zu treffen, ob das empfangene Tomogramm ein reales Tomogramm oder ein künstlich erzeugtes Tomogramm ist,
      ▪ wobei das erste Netz und das zweite Netz in einem unüberwachten Lernverfahren gemeinsam trainiert werden, wobei das erste Netz trainiert wird, künstliche Tomogramme zu erzeugen, die von dem zweiten Netz nicht als künstlich eingeschätzt werden und das zweite Netz trainiert wird, künstliche Tomogramme von realen Tomogrammen zu unterscheiden,
   o Speichern zumindest des ersten Netzes und/oder Zuführen des ersten Netzes einem Verfahren zur Vorhersage eines künstlichen Tomogramms für ein Untersuchungsobj ekt.
10. Computersystem zur Ausführung eines Verfahrens zum Erzeugen eines künstlichen, kontrastverstärkten Tomogramms gemäß einer der Ausführungsformen 1 bis 7.
11. Computersystem gemäß Ausführungsform 10, wobei das Computersystem (10) eine Empfangseinheit (11), eine Steuer- und Recheneinheit (12) und eine Ausgabeeinheit (13) umfasst.
12. Computersystem gemäß einer der Ausführungsformen 10 oder 11, wobei die Steuer- und Recheneinheit konfiguriert ist, aus mindestens drei realen Tomogrammen eines Untersuchungsbereichs eines Untersuchungsobjekts, die den Untersuchungsbereich nach Applikation eines Kontrastmittels repräsentieren, ein künstliches, kontrastverstärktes Tomogramm nach einem Verfahren gemäß einer der Ausführungsformen 1 bis 4 zu erzeugen.
13. Computerprogrammprodukt umfassend ein Computerprogramm, das in einen Arbeitsspeicher eines Computersystems geladen werden kann und dort das Computersystem dazu veranlasst, das Verfahren zum Erzeugen eines künstlichen, kontrastverstärkten Tomogramms gemäß einer der Ausführungsformen 1 bis 7 auszuführen.
14. Verwendung eines Verfahrens gemäß einer der Ausführungsformen 1 bis 7 zur Erzeugung eines künstlichen, kontrastverstärkten Tomogramms.
15. Verwendung eines Kontrastmittels in einem Verfahren gemäß einer der Ausführungsformen 1 bis 7 zur Vorhersage mindestens einer radiologischen Aufnahme.
16. Kontrastmittel zur Verwendung in einem Verfahren gemäß einer der Ausführungsformen 1 bis 7 zur Vorhersage mindestens einer radiologischen Aufnahme.
17. Kit umfassend ein Kontrastmittel und ein Computerprogrammprodukt gemäß Ausführungsform 13.

## Patentansprüche

1. Verfahren zum Trainieren eines Vorhersagemodells, umfassend die Schritte
- Empfangen eines Trainingsdatensatzes, wobei der Trainingsdatensatz für jedes Referenzobjekt einer Vielzahl von Referenzobjekten eine Mehrzahl an Referenz-Tomogrammen umfasst,
o wobei die Referenz-Tomogramme ein Aufnahmevolumen des Referenzobjekts nach der Applikation eines Kontrastmittels repräsentieren,
o wobei die Referenz-Tomogramme für jedes Referenzobjekts mindestens zwei Tomogramme umfassen: ein erstes Referenz-Tomogramm und ein zweites Referenz-Tomogramm,
▪ wobei das erste Referenz-Tomogramm eine erste Schicht innerhalb des Aufnahmevolumens repräsentiert,
▪ wobei das zweite Referenz-Tomogramm eine zweite Schicht innerhalb des Aufnahmevolumens repräsentiert,
• wobei das zweite Referenz-Tomogramm zeitlich nach dem ersten Referenz-Tomogramm erzeugt worden ist,
- Trainieren des Vorhersagemodells, wobei dem Vorhersagemodell beim Trainieren das erste und das zweite Referenz-Tomogramm zugeführt werden, wobei das Vorhersagemodell trainiert wird, Kontrastverstärkung von dem ersten Referenz-Tomogramm auf das zweite Referenz-Tomogramm zu übertragen und ein künstliches Tomogramm zu erzeugen, das die zweite Schicht repräsentiert.

2. Verfahren gemäß Anspruch 1, wobei das Vorhersagemodell zwei künstliche neuronale Netze umfasst, ein erstes Netz und ein zweites Netz,
o wobei das erste Netz konfiguriert ist, für jedes Referenzobjekt das erste und das zweite Tomogramm zu empfangen und ein künstliches Tomogramm auf Basis der empfangenen Tomogramme zu erzeugen, wobei das künstliche Tomogramm die zweite Schicht in dem Aufnahmevolumen repräsentiert
o wobei das zweite Netz konfiguriert ist, das zweite Tomogramm und/oder das künstliche Tomogramm zu empfangen und für das empfangene Tomogramm eine Aussage zu treffen, ob das empfangene Tomogramm ein reales Tomogramm oder ein künstlich erzeugtes Tomogramm ist,
o wobei das erste Netz und das zweite Netz in einem überwachten oder unüberwachten Lernverfahren gemeinsam trainiert werden, wobei das erste Netz trainiert wird, künstliche Tomogramme zu erzeugen, die von dem zweiten Netz nicht als künstlich eingeschätzt werden und das zweite Netz trainiert wird, künstliche Tomogramme von realen Tomogrammen zu unterscheiden.

3. Verfahren gemäß Anspruch 1 oder 2, ferner umfassend den Schritt:
- Speichern zumindest des ersten Netzes und/oder Zuführen des ersten Netzes einem Verfahren zur Vorhersage eines künstlichen kontrastverstärkten Tomogramms für ein Untersuchungsobj ekt.

4. Verfahren zum Erzeugen eines künstlichen, kontrastverstärkten Tomogramms, umfassend die Schritte:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt worden ist,
o Bereitstellen eines Vorhersagemodells, wobei das Vorhersagemodell anhand eines Trainingsdatensatzes trainiert worden ist, Kontrastinformationen von mindestens einem Tomogramm auf ein anderes Tomogramm zu übertragen und dabei ein künstliches Tomogramm zu erzeugen,
o Zuführen des ersten und zweiten Tomogramms dem Vorhersagemodell,
o Empfangen eines künstlichen Tomogramms von dem Vorhersagemodell, wobei das künstliche Tomogramm die zweite Schicht in dem Aufnahmevolumen repräsentiert, wobei in dem künstlichen Tomogramm Kontrastinformationen von dem ersten Tomogramm übertragen worden sind,
o Ausgeben des künstlichen Tomogramms.

5. Verfahren gemäß Anspruch 4 umfassend die Schritte:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert,
o Empfangen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
o Bereitstellen eines Vorhersagemodells, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
o Zuführen des ersten, zweiten und dritten Tomogramms dem Vorhersagemodell,
o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
o Ausgeben des künstlichen Tomogramms.

6. Verfahren gemäß Anspruch 5, wobei das Bereitstellen des Vorhersagemodells die folgenden Schritte umfasst:
- Empfangen eines Trainingsdatensatzes, wobei der Trainingsdatensatz für jedes Referenzobjekt einer Vielzahl von Referenzobjekten eine Mehrzahl an Referenz-Tomogrammen umfasst,
o wobei die Referenz-Tomogramme ein Aufnahmevolumen des Referenzobjekts nach der Applikation eines Kontrastmittels repräsentieren,
o wobei die Referenz-Tomogramme für jedes Referenzobjekts mindestens drei Tomogramme umfassen: ein erstes Referenz-Tomogramm, ein zweites Referenz-Tomogramm und ein drittes Referenz-Tomogramm,
▪ wobei das erste Referenz-Tomogramm eine erste Schicht innerhalb des Aufnahmevolumens repräsentiert,
▪ wobei das zweite Referenz-Tomogramm eine zweite Schicht innerhalb des Aufnahmevolumens repräsentiert,
▪ wobei das dritte Referenz-Tomogramm eine dritte Schicht innerhalb des Aufnahmevolumens repräsentiert,
• wobei die dritte Schicht in dem Aufnahmevolumen zwischen der ersten Schicht und der zweiten Schicht liegt,
• wobei das dritte Referenz-Tomogramm zeitlich nach dem ersten Referenz-Tomogramm und dem zweiten Referenz-Tomogramm erzeugt worden ist,
- Trainieren des Vorhersagemodells, wobei dem Vorhersagemodell das erste, das zweite und das dritte Referenz-Tomogramm zugeführt werden, wobei das Vorhersagemodell trainiert wird, Kontrastverstärkung von dem ersten und dem zweiten Referenz-Tomogramm auf das dritte Referenz-Tomogramm zu übertragen und ein künstliches Tomogramm zu erzeugen, das die dritte Schicht repräsentiert.

7. Verfahren gemäß einem der Ansprüche 5 oder 6, wobei das Vorhersagemodell beim Trainieren zwei künstliche neuronale Netze umfasst, ein erstes Netz und ein zweites Netz,
• wobei das erste Netz konfiguriert ist, für jedes Referenzobjekt das erste, das zweite und das dritte Tomogramm zu empfangen und ein künstliches Tomogramm auf Basis der empfangenen Tomogramme zu erzeugen, wobei das künstliche Tomogramm die dritte Schicht in dem Aufnahmevolumen repräsentiert,
• wobei das zweite Netz konfiguriert ist, das dritte Tomogramm und/oder das künstliche Tomogramm zu empfangen und für das empfangene Tomogramm eine Aussage zu treffen, ob das empfangene Tomogramm ein reales Tomogramm oder ein künstlich erzeugtes Tomogramm ist,
• wobei das erste Netz und das zweite Netz in einem unüberwachten Lernverfahren gemeinsam trainiert werden / worden sind, wobei das erste Netz trainiert wird / worden ist, künstliche Tomogramme zu erzeugen, die von dem zweiten Netz nicht als künstlich eingeschätzt werden und das zweite Netz trainiert wird / worden ist, künstliche Tomogramme von realen Tomogrammen zu unterscheiden,
wobei die Vorhersage des künstlichen Tomogramms mittels des ersten Netzes erfolgt.

8. Verfahren gemäß einem der Ansprüche 4 bis 7, umfassend die Schritte:
o Empfangen einer Zahl n an Tomogrammen T1, ...., Tn, wobei n eine ganze ungerade Zahl größer als 2 ist,
▪ wobei jedes Tomogramm T1, ...., Tn jeweils eine Schicht S1, ..., Sn innerhalb eines Aufnahmevolumens eines Untersuchungsobjekts nach der Applikation eines Kontrastmittels repräsentiert,
• wobei die Schichten S1, ..., Sn parallel zueinander in einer räumlichen Abfolge angeordnet sind,
o wobei die räumliche Abfolge durch die Indizes 1, ..., n angegeben wird,
▪ wobei die Tomogramme in einer Reihenfolge erzeugt worden sind, bei der zunächst die Tomogramme T2k+1 und dann die Tomogramme T2k erzeugt werden, wobei k ein Index ist, der die Werte von 0 bis (n-1)/2 durchläuft,
o Bereitstellen eines Vorhersagemodells, wobei das Vorhersagemodell anhand eines Trainingsdatensatzes trainiert worden ist, Kontrastinformationen von jeweils zwei unmittelbar benachbarten Tomogrammen, die zu einem früheren Zeitpunkt erzeugt worden sind, auf Tomogramme, die zu einem späteren Zeitpunkt erzeugt worden sind, zu übertragen dabei ein künstliche, kontrastverstärkte Tomogramme zu erzeugen,
o Zuführen der empfangenen Tomogramme dem Vorhersagemodell,
o Empfangen einer Zahl (n-1)/2 von künstlichen Tomogrammen KT, wobei jedes künstliche Tomogramm KT₂ᵢ₊₁ die jeweilige Schicht S₂ᵢ₊₁ repräsentiert und auf Basis der Tomogramme T₂ᵢ und T₂ᵢ₊₂ erzeugt worden ist, wobei i ein Index ist, der die Zahlen von 0 bis k annehmen kann,
o Ausgeben mindestens eines der künstlichen Tomogramme.

9. Verfahren gemäß einem der Ansprüche 4 bis 8, umfassend den Schritt:
- Erzeugen einer ungeraden Zahl n an Tomogrammen T1, ..., Tn, wobei die Tomogramme gemäß folgenden Regeln erzeugt werden:
(i) Tomogramme mit ungeradzahligen Indizes 1, 3, ..., n werden vor Tomogrammen mit geradzahligen Indizes 2, 4, ..., (n-1) erzeugt.
(ii) Erzeugung der Tomogramme von den zwei äußersten Schichten in der Reihenfolge T1, Tn oder Tn, T1.
(iii) Identifizierung einer Lücke mit dem größten Abstand zwischen zwei gescannten Schichten, wobei die Lücke ein Bereich zwischen zwei gescannten Schichten ist, in denen noch nicht gescannte Schichten liegen. Gibt es mehrere Lücken mit dem gleichen Abstand, wird für jede dieser Lücken die Summe der Kennnummern der gescannten Schichten, die die Lücke begrenzen, berechnet. Es wird diejenige Lücke gewählt, bei der die Summe der Kennnummern am größten ist. Gibt es mehrere solcher Lücken mit den gleichen größten Kennnummern, wird diejenige Lücke gewählt, die den größten Abstand zu der zuletzt gescannten Schicht aufweist. Gibt es mehrere Lücken mit einem größten Abstand zu der zuletzt gescannten Schicht, wird unter den entsprechenden Lücken diejenige Lücke ausgewählt, die den größten Abstand zu der Schicht aufweist, die unmittelbar vor der zuletzt gescannten Schicht aufweist (und so fort).
(iv) Erzeugung des Tomogramms derjenigen Schicht in einer Lücke, die am ehesten zu einer Halbierung der Lücke führt. Gibt es mehrere dieser Schichten, wird diejenige Schicht gewählt, die den größten Abstand zu der zuletzt gescannten Schicht aufweist.
wobei die Regel (i) Vorrang vor allen anderen Regeln hat, und wobei die Regel (ii) Vorrang vor Regel (iii) und (iv) hat, und wobei die Regel (iii) Vorrang vor Regel (iv) hat.

10. Computersystem umfassend
• eine Empfangseinheit,
• eine Steuer- und Recheneinheit und
• eine Ausgabeeinheit,
o wobei die Steuer- und Recheneinheit konfiguriert ist, die Empfangseinheit zu veranlassen mindestens ein erstes und ein zweites Tomogramm zu empfangen,
- wobei das erste Tomogramm eine erste Schicht innerhalb eines Aufnahmevolumens eines Untersuchungsobjekts nach der Applikation eines Kontrastmittels repräsentiert,
- wobei das zweite Tomogramm eine zweite Schicht innerhalb des Aufnahmevolumens des Untersuchungsobjekts nach der Applikation des Kontrastmittels repräsentiert,
- wobei das zweite Tomogramm zeitlich nach dem ersten und dem zweiten Tomogramm erzeugt worden ist,
o wobei die Steuer- und Recheneinheit konfiguriert ist, das erste und das zweite Tomogramm einem Vorhersagemodell zuzuführen, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o wobei die Steuer- und Recheneinheit konfiguriert ist, von dem Vorhersagemodell ein künstliches Tomogramm zu empfangen, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o wobei die Steuer- und Recheneinheit konfiguriert ist, die Ausgabeeinheit zu veranlassen, das künstliche Tomogramm auszugeben.

11. Computersystem gemäß Anspruch 10,
o wobei die Steuer- und Recheneinheit konfiguriert ist, die Empfangseinheit zu veranlassen mindestens ein erstes, ein zweites und ein drittes Tomogramm zu empfangen,
- wobei das erste Tomogramm eine erste Schicht innerhalb eines Aufnahmevolumens eines Untersuchungsobjekts nach der Applikation eines Kontrastmittels repräsentiert,
- wobei das zweite Tomogramm eine zweite Schicht innerhalb des Aufnahmevolumens des Untersuchungsobjekts nach der Applikation des Kontrastmittels repräsentiert,
- wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
o wobei die Steuer- und Recheneinheit konfiguriert ist, das erste, das zweite und das dritte Tomogramm einem Vorhersagemodell zuzuführen, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
o wobei die Steuer- und Recheneinheit konfiguriert ist, von dem Vorhersagemodell ein künstliches Tomogramm zu empfangen, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
o wobei die Steuer- und Recheneinheit konfiguriert ist, die Ausgabeeinheit zu veranlassen, das künstliche Tomogramm auszugeben.

12. Computerprogrammprodukt umfassend ein Computerprogramm, das in einen Arbeitsspeicher eines Computersystems geladen werden kann und dort das Computersystem dazu veranlasst, folgende Schritte ausführen:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt worden ist,
o Zuführen des ersten und zweiten Tomogramms einem Vorhersagemodell, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o Empfangen eines künstlichen Tomogramms von dem Vorhersagemodell, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o Ausgeben des künstlichen Tomogramms.

13. Computerprogrammprodukt gemäß Anspruch 12, wobei das Computerprogramm das Computersystem dazu veranlasst, folgende Schritte ausführen:
o Empfangen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Empfangen eines zweiten Tomogramms, wobei das zweite Tomogramm eine zweite Schicht innerhalb des Aufnahmevolumens des Untersuchungsobjekts nach der Applikation des Kontrastmittels repräsentiert,
o Empfangen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
o Zuführen des ersten, zweiten und dritten Tomogramms einem Vorhersagemodell, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
o Ausgeben des künstlichen Tomogramms.

14. Verwendung eines Kontrastmittels in einem Verfahren zur Vorhersage eines künstlichen kontrastverstärkten Tomogramms, wobei das Verfahren die folgenden Schritte umfasst:
o Erzeugen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Erzeugen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt wird,
o Zuführen des ersten, und zweiten Tomogramms einem Vorhersagemodell, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o Empfangen eines künstlichen Tomogramms von dem Vorhersagemodell, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o Ausgeben des künstlichen Tomogramms.

15. Verwendung gemäß Anspruch 14, wobei das Verfahren die folgenden Schritte umfasst:
o Erzeugen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Erzeugen eines zweiten Tomogramms, wobei das zweite Tomogramm eine zweite Schicht innerhalb des Aufnahmevolumens des Untersuchungsobjekts nach der Applikation des Kontrastmittels repräsentiert,
o Erzeugen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
o Zuführen des ersten, zweiten und dritten Tomogramms einem Vorhersagemodell, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
o Ausgeben des künstlichen Tomogramms.

16. Kontrastmittel zur Verwendung in einem Verfahren zur Vorhersage eines künstlichen kontrastverstärkten Tomogramms, wobei das Verfahren die folgenden Schritte umfasst:
o Erzeugen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Erzeugen eines zweiten Tomogramms, wobei das zweite Tomogramm eine zweite Schicht innerhalb des Aufnahmevolumens des Untersuchungsobjekts nach der Applikation des Kontrastmittels repräsentiert, wobei das zweite Tomogramm zeitlich nach dem ersten Tomogramm erzeugt wird,
o Zuführen des ersten und zweiten Tomogramms einem Vorhersagemodell, wobei das Vorhersagemodell anhand eines Trainingsdatensatzes trainiert worden ist, Kontrastinformationen von mindestens einem Tomogrammen auf ein anderes Tomogramm zu übertragen und dabei ein künstliches Tomogramm zu erzeugen,
o Empfangen eines künstlichen Tomogramms von dem Vorhersagemodell, wobei das künstliche Tomogramm die zweite Schicht in dem Aufnahmevolumen repräsentiert, wobei in dem künstliches Tomogramm Kontrastinformationen von dem ersten Tomogramm übertragen worden sind,
o Ausgeben des künstlichen Tomogramms.

17. Kontrastmittel zur Verwendung gemäß Anspruch 16, wobei das Verfahren die folgenden Schritte umfasst:
o Erzeugen eines ersten Tomogramms, wobei das erste Tomogramm eine erste Schicht innerhalb eines Aufnahmevolumens eines Untersuchungsobjekts nach der Applikation eines Kontrastmittels repräsentiert,
o Erzeugen eines zweiten Tomogramms, wobei das zweite Tomogramm eine zweite Schicht innerhalb des Aufnahmevolumens des Untersuchungsobjekts nach der Applikation des Kontrastmittels repräsentiert,
o Erzeugen eines dritten Tomogramms, wobei das dritte Tomogramm eine dritte Schicht innerhalb des Aufnahmevolumens des Untersuchungsobjekts nach der Applikation des Kontrastmittels repräsentiert, wobei die dritte Schicht zwischen der ersten und der zweiten Schicht liegt, wobei das dritte Tomogramm zeitlich nach dem ersten und dem zweiten Tomogramm erzeugt wird,
o Zuführen des ersten, zweiten und dritten Tomogramms einem Vorhersagemodell, wobei das Vorhersagemodell anhand eines Trainingsdatensatzes trainiert worden ist, Kontrastinformationen von mindestens zwei Tomogrammen auf ein Tomogramm zu übertragen und dabei ein künstliches Tomogramm zu erzeugen,
o Empfangen eines künstlichen Tomogramms von dem Vorhersagemodell, wobei das künstliche Tomogramm die dritte Schicht in dem Aufnahmevolumen repräsentiert, wobei in dem künstliches Tomogramm Kontrastinformationen von dem ersten und von dem zweiten Tomogramm übertragen worden sind,
o Ausgeben des künstlichen Tomogramms.

18. Kit umfassend ein Kontrastmittel und ein erfindungsgemäßes Computerprogrammprodukt gemäß einem der Ansprüche 12 oder 13.
